# EUROPEAN PATENT APPLICATION

(11) **EP 4 328 659 A1**
(43) Date of publication of application: **28.02.2024**
(21) Application number: 22791492.6
(22) Date of filing: 28.03.2022
(51) Int. Cl.: G02C 7/04, B29D 11/00

(54) **SOFT OPHTHALMIC LENS AND METHOD FOR MANUFACTURING SAME**

(30) Priority: 19.04.2021 JP 2021070676
(71) Applicant: National Institute for Materials Science, Tsukuba-shi, Ibaraki 305-0047 (JP); Seed Co., Ltd., Tokyo 113-8402 (JP)
(72) Inventor: ICHINOSE Izumi, Tsukuba-shi, Ibaraki 305-0047 (JP); JONIN Kunio, Tokyo 113-8402 (JP); YAMANAKA Risako, Tokyo 113-8402 (JP)
(74) Representative: J A Kemp LLP
(86) International application number: PCT/JP2022/014823
(87) International publication number: WO 2022/224717

(57) **Abstract**

An objective of the present invention is to provide a method for manufacturing a soft ocular lens in which the surface of the lens is hydrophilized by means of plasma processing, wherein a substrate surface can be sufficiently hydrophilized by performing, once, a reaction between the substrate and a hydrophilic polymer. Another object of the present invention is to provide a soft ocular lens with sufficient hydrophilicity which comprises only one layer comprising a hydrophilic polymer on a substrate surface. A substrate comprising a hydrocarbon group-containing polysiloxane is subjected to plasma processing with an inert gas such as nitrogen, to form a radical including Si-CH₂ on the substrate surface, and produce radical rearrangement with a hydrophilic polymer, thereby causing the hydrophilic polymer to bind to the substrate surface by recombination of a radical generated in the hydrophilic polymer with the substrate.

## Description

### TECHNICAL FIELD

The present invention relates to a novel soft ocular lens with a hydrophilized surface, and a method for producing the same.

### BACKGROUND ART

At present, as for soft ocular lenses (SCL), lenses made of a silicone-containing material with high oxygen permeability have been widely spread; and silicone hydrogel contact lenses (SHGCL) made of a hydrogel material with a high water content of about 25% to 80%, and flexible gas-permeable contact lenses having low-water or no-water (FGPCL) with a water content of 10% or less have been developed. SHGCL contain silicone and thus has high oxygen permeability and excellent wearing feeling as compared with previous SCL. However, due to high water contents, evaporation of water from the lens causes dry feeling during wearing. On the other hand, FGPCL usually have higher silicone contents, and they thus have higher oxygen permeability and are expected to reduce dry feeling during wearing by low or non-hydrous properties.

FGPCL have however had problems that the high hydrophobicity/water repellency of the lens surfaces causes feelings of discomfort at the time of wearing, and low smoothness and stain resistance.

For SHGCL and FGPCL having such problems, various attempts for modifying the lens surface have been made.

For example, proposed been has a soft ocular lens with a hydrophilic lens surface in which a substrate obtained by polymerizing polydimethylsiloxane (PDMS) with a hydrophilic monomer such as N,N-dimethylacrylamide or ethylene glycol dimethacrylate is hydrated with water, and then sequentially immersed in an aqueous solution of polyvinyl alcohol and a mixed aqueous solution of polyvinyl pyrrolidone and polyethylene glycol (PEG) to make the lens surface hydrophilic (PATENT LITERATURE 1).

Proposed been also has a soft ocular lens with a hydrophilic lens surface in which an ionic chain polymer is incorporated into a silicone-containing soft lens substrate with a network structure, the ionic chain polymer is charged, and then a hydrophilic polymer with an opposite charge is adsorbed to the ionic chain polymer to make the lens surface hydrophilic (PATENT LITERATURE 2).

Also, proposed been has a silicone hydrogel soft ocular lens with a hydrophilic coating layer in which a silicone hydrogel lens substrate obtained by polymerizing a siloxane-containing monomer or macromer, a vinyl-based monomer mixture, and N-vinylpyrrolidone is immersed in an aqueous solution of an anionic polymer with a carboxyl group such as polyacrylic acid to adsorb the anionic polymer on the surface of the substrate, and the anionic polymer is crosslinked with a water-soluble, thermally crosslinkable hydrophilic polymer such as polyamidoamine epichlorohydrin to form a hydrophilic coating layer (PATENT LITERATURE 3).

Moreover, disclosed been has a soft ocular lens with a hydrophilic lens surface in which an acidic polymer and a basic polymer are alternately adsorbed to a SHGCL substrate or a FGPCL substrate by a so-called LbL assembly to make the lens surface hydrophilic (PATENT LITERATURES 4 to 8).

Since all these soft ocular lenses adsorb hydrophilic polymers onto their substrates through non-covalent bonds, the coating layers composed of hydrophilic polymers are easily detached from the lens surfaces by physical stimulation such as scrubbing. Also, in these soft ocular lenses, the amount of hydrophilic polymers present on the surface of the substrate is insufficient if the hydrophilic polymers are adsorbed on the surface of the substrate only once, and a part of the surface of the substrate is exposed. Therefore, a first hydrophilic polymer is used as a base, and a second hydrophilic polymer is adsorbed or bonded thereto. As a result, the production process becomes complicated, which becomes a factor for increasing the production cost.

On the other hand, developed been have soft ocular lenses in which a hydrophilic coating layer is provided by covalently bonding a hydrophilic polymer to a substrate by various methods.

For example, proposed been has a method of forming a hydrophilic coating layer on a substrate in which the substrate is placed in a gas atmosphere containing a coating material and subjected to plasma polymerization to form a hydrophilic coating layer on the substrate. Specifically, a method has been proposed in which a lens substrate made of polydimethylsiloxane (PDMS) is placed in a glow discharge polymerization apparatus, a mixed gas of a hydrocarbon such as methane and a halogenated hydrocarbon such as perfluoromethane is introduced after reducing pressure, and plasma is generated by glow discharge to form a coating layer with a graphite-like tightly crosslinked structure on the substrate (PATENT LITERATURE 9). In addition, this document proposes a method in which a lens substrate made of PDMS is placed in a glow discharge polymerization apparatus, a mixed gas of hydrogen and a halogenated hydrocarbon such as tetrafluoroethylene is introduced after reducing pressure, plasma is generated by glow discharge to form a coating layer on the substrate, oxygen is further introduced into the atmosphere, and oxygen plasma is generated by glow discharge to form a hydrophilic coating layer.

Proposed been also has a method in which a silicone-containing lens substrate is placed in a mixed gas of a coating material such as alkane or N-vinylpyrrolidone with an inert gas such as argon, air, or oxygen; and a hydrophilic coating layer is formed by plasma polymerization (PATENT LITERATURE 10).

In these methods for forming a coating layer by plasma polymerization, the coating materials are exposed to plasma to form a radical, and the radical is reacted with the surface of the substrate, thus forming a coating layer with different characteristics from the original ones of the hydrophilic polymer. For example, when plasma polymerization is performed using N-vinylpyrrolidone, various kinds of radicals are generated, and all of them are involved in a polymerization reaction to form a complicated crosslinked structure (NON PATENT LITERATURE 1). In addition, a decomposition product of N-vinylpyrrolidone is also generated in the gas phase. Therefore, the coating layer formed by plasma polymerization is completely different from polyvinylpyrrolidone and is a similar substance to amorphous carbon. For this reason, there is a demand for a technique for forming a coating layer having the original characteristics of the hydrophilic polymer.

In response to such a demand, a method is disclosed in which a lens substrate is activated by plasma treatment, and the activated surface is reacted with a hydrophilic polymer having a functional group to form a coating layer.

For example, a method has been proposed in which a substrate is subjected to plasma treatment in air, oxygen, methane, CO₂, a mixed gas of oxygen and methane, a mixed gas of CO₂ and methane, or a mixed gas of methane and air; and after the treatment, the substrate is immersed in an acidic solution of an anionic polymer with a carboxyl group or an alkaline solution of a cationic polymer with a primary/secondary amino group to form a base coating layer; and a hydrophilic polymer with a predetermined reactive group is crosslinked with the base coating layer to form a hydrogel coating layer on a SHGCL substrate or an FGPCL substrate (PATENT LITERATURES 11 and 12).

In addition, a method has been proposed in which an FGPCL substrate mainly composed of polysiloxane is subjected to oxygen plasma treatment to generate a silanol group (Si-OH) on the surface, and a hydrophilic polymer with a silane coupling group at a terminal thereof is subjected to a silane coupling reaction to form a hydrophilic layer on the surface of the substrate (PATENT LITERATURE 13).

In addition, a method is disclosed in which a first polymer species with a predetermined reactive group is covalently bonded to the surface of an FGPCL substrate containing 75% or more of silicone, and then a second polymer species with a predetermined reactive group is crosslinked with the first polymer species to form a hydrogel layer. Plasma treatment is mentioned as one of various means for covalently bonding the first polymer species to the substrate (PATENT LITERATURES 14 and 15). However, these documents neither demonstrate specific production processes with plasma treatment nor describe specific conditions for covalently bonding the first polymer species to the substrate with plasma treatment.

### CITATION LIST

### PATENT LITERATURE

PATENT LITERATURE 1: JP-A-2020-42253
PATENT LITERATURE 2: JP-B-6230880
PATENT LITERATURE 3: US 2017/0,165,932 A
PATENT LITERATURE 4: JP-B-4551219
PATENT LITERATURE 5: JP-B-5064498
PATENT LITERATURE 6: JP-B-4634603
PATENT LITERATURE 7: JP-A-2016-28292
PATENT LITERATURE 8: JP-A-2020-8873
PATENT LITERATURE 9: US 4,312,575
PATENT LITERATURE 10: EP 1043605 A
PATENT LITERATURE 11: JP-B-6592189
PATENT LITERATURE 12: JP-B-6680870
PATENT LITERATURE 13: JP-A-2015-158615
PATENT LITERATURE 14: JP-A-2017-530423
PATENT LITERATURE 15: JP-A-2019-219666
PATENT LITERATURE 16: WO 2017/175705 A

### NON PATENT LITERATURE

NON PATENT LITERATURE 1: C. Dispenza, et. al., Radiation Physics and Chemistry, 2020, Vol.174, 108900.
NON PATENT LITERATURE 2: J. Wu, et. al., Lab Chip, 2014, 14, 1564-1571.
NON PATENT LITERATURE 3: S. R. A. Kratz, et. al., Scientific Reports, 2020, 10:1400.
NON PATENT LITERATURE 4: E. Ismail, et. al., Chemistry Letters, 2020, CL-200504.
NON PATENT LITERATURE 5: P. Zhang, et. al., Phys. Chem. Chem. Phys., 2014, Vol.16, 17479-17486.
NON PATENT LITERATURE 6: I. Auzmendi-Murua, et. al., Journal of Physical Chemistry A, 2014, Vol.118, 3147-3167.

### SUMMARY OF INVENTION

### TECHNICAL PROBLEM

In the conventional soft ocular lenses having hydrophilic coating layers formed by the plasma treatments as described above, silicone (or polysiloxane compounds) such as PDMS is partially decomposed by plasma of air, oxygen, methane, CO₂, or the like to generate a hydroxyl group or a hydrocarbon containing a hydroxyl group; and a covalent bond (e.g., an ester bond, an amide bond, or a siloxane bond) is formed between these groups and a functional group (e.g., a carboxyl group, an amino group, or a silane coupling group) of the hydrophilic polymer.

However, in such a conventional method, the surface of the substrate obtained by covalently bonding the first hydrophilic polymer to the surface of the substrate by plasma treatment is not sufficiently hydrophilized, and the surface of the substrate is hydrophilized by further adsorbing or crosslinking a second hydrophilic polymer to the first hydrophilic polymer. Therefore, there is a demand for a manufacturing method with plasma treatment that can make the process simpler and reduce manufacturing costs.

An objective of the present invention is to respond to such demands, more specifically, to provide a method for manufacturing a soft ocular lens of which the surface is hydrophilized by plasma treatment, wherein the surface of a substrate can be sufficiently hydrophilized by performing, once, a reaction between the substrate and a hydrophilic polymer. Also, another object of the present invention is to provide a soft ocular lens with sufficient hydrophilicity by only one layer made of a hydrophilic polymer on the surface of a substrate.

### SOLUTION TO PROBLEM

In order to solve the above problem, that is, in order to impart sufficient hydrophilicity to a silicone-containing lens with one layer made of a hydrophilic polymer, the present inventors first clarified a mechanism of bonding a hydrophilic polymer to a substrate with conventional plasma treatment.

In a conventional method of bonding a hydrophilic polymer to a substrate with air or oxygen plasma treatment, Si-OH is formed on the surface of the substrate by active oxygen generated with the plasma treatment, and a functional group of the hydrophilic polymer is reacted with the Si-OH. However, the Si-OH strongly reacts with Si-OH of other silicone to form a Si-O-Si bond, and the Si-OH on the surface of the substrate after plasma treatment decreases over time (NON PATENT LITERATURES 2 and 3). In addition, the functional groups (e.g., a carboxyl group, an amino group) of the hydrophilic polymer do not react with Si-OH of silicone in a neutral condition and need to react with or adsorb to Si-OH on the surface of the substrate in acidic or alkaline conditions as described in PATENT LITERATURE 12. From these points of view, it has been confirmed that it is difficult to impart sufficient hydrophilicity only by the conventional method of bonding a hydrophilic polymer to a substrate by air or oxygen plasma treatment or formation of a base coating layer.

On the other hand, in the plasma treatment with a gas in which carbon compounds such as methane and CO₂ are mixed with air or oxygen, a reactive group such as Si-CH₂-OH with a carbon atom can be generated on a PDMS surface, and this reactive group is more stable than Si-OH.

However, this plasma treatment is the same in that OH groups are generated on the surface of the substrate and the functional groups of the hydrophilic polymer are reacted with the OH groups, and it is difficult to impart sufficient hydrophilicity only by this reaction. In addition, in order to produce such a reaction, plasma treatment is performed with a (mixed) gas containing oxygen, but a gas containing oxygen or carbon such as methane or CO₂ generates corresponding active species with plasma treatment, which react with radicals on the surface of the substrate to form a stable chemical bond. The gas therefore was not suitable for utilizing radicals generated on the surface of the substrate. For example, radical Si · forms a stable Si-O bond with an activated oxygen atom, and radical Si-CH₂ · forms Si-CH₂-C with an activated carbon atom. Therefore, the gas used in the conventional plasma treatment reduced radicals generated on the surface of the substrate.

In view of these bonding mechanism in and problems with the conventional plasma treatments, the present inventors have aimed at a reaction system for reacting with a hydrophilic polymer using radicals generated on the surface of the substrate and investigated various plasma treatment conditions. As a result, the present inventors have found that when a substrate containing an alkyl group-containing polysiloxane structure is subjected to plasma treatment in an inert gas such as nitrogen, radicals containing Si-CₙH₂ₙ · are formed on the surface of the substrate, and these radicals are radically transferred to a hydrophilic polymer, and the hydrophilic polymer can be efficiently bonded to the surface of the substrate through the radicals generated in the hydrophilic polymer. The present inventors have confirmed that the obtained coating layer can achieve sufficient hydrophilicity alone, thereby reaching the present invention.

That is, the present invention provides the following methods for producing a soft ocular lens and soft ocular lenses.

[1] A soft ocular lens comprising:
   a contact lens substrate containing a (co)polymer with an alkyl group-containing polysiloxane structure, and
   a single coating layer containing a hydrophilic polymer on the surface of the substrate,
   in which the surface of the coating layer has a water contact angle of 70° or less.
[2] The soft ocular lens according to [1], wherein an entire peak derived from Si₂ₚ in XPS measurement has a full width at half maximum of 2.1 eV or less.
[3] The soft ocular lens according to [1], wherein 60% or more of peaks derived from Si₂ₚ in XPS measurement are bonded to two O atoms and two C atoms.
[4] The soft ocular lens according to any one of [1] to [3], wherein adsorbed water is confirmed on the surface of the coating layer by XPS analysis under a water vapor pressure of 5 mbar.
[5] The soft ocular lens according to any one of [1] to [4], wherein the surface of the coating layer has a water contact angle of 60° or less, or 50° or less.
[6] The soft ocular lens according to any one of [1] to [5], wherein the surface of the coating layer after a 20 times abrasion test has a water contact angle of 70° or less.
[7] The soft ocular lens according to [6], wherein the surface of the coating layer after the 20 times abrasion test has a water contact angle of 60° or less.
[8] The soft ocular lens according to any one of [1] to [5], wherein the surface of the coating layer after a 200 times abrasion test has a water contact angle of 50° or less.
[9] The soft ocular lens according to any one of [1] to [8], wherein the coating layer has a thickness of 1 nm to 5 µm.
[10] The soft ocular lens according to any one of [1] to [9], wherein the substrate and the hydrophilic polymer are linked at least through a C-C bond between Si-C of the substrate and C of the hydrophilic polymer.
[11] The soft ocular lens according to any one of [1] to [10], wherein the substrate and the hydrophilic polymer are further linked through an O-C bond between Si-alkylene-O-O of the substrate and C of the hydrophilic polymer.
[12] The soft ocular lens according to [10] or [11], wherein the substrate and the hydrophilic polymer are further linked through a Si-C bond between Si of the substrate and C of the hydrophilic polymer.
[13] The soft ocular lens according to any one of [10] to [12], wherein 5% or more of alkyl group-containing polysiloxane units present on the surface of the substrate are bonded to C of the hydrophilic polymer.
[14] The soft ocular lens according to [12] or [13], wherein 10% or more of alkyl group-containing polysiloxane units present on the surface of the substrate are bonded to C of the hydrophilic polymer.
[15] The soft ocular lens according to any one of [1] to [14], wherein the hydrophilic polymer is water-soluble and has an atom with a non-covalent pair or a double bond, wherein a carbon adjacent to the atom with a non-covalent pair or the double bond is bonded to Si, a carbon of Si-C, or an oxygen of Si-alkylene-O-O of the substrate.
[16] The soft ocular lens according to any one of [1] to [15], wherein the substrate is obtained by polymerizing a (macro)monomer composition containing 20% by mass or more of an alkyl group-containing polysiloxane.
[17] The soft ocular lens according to [16], wherein the substrate is obtained by polymerizing a (macro)monomer composition containing 30% by mass or more of an alkyl group-containing polysiloxane.
[18] The soft ocular lens according to any one of [1] to [17], wherein the (co)polymer with an alkyl group-containing polysiloxane structure is obtained by polymerizing a (macro)monomer composition containing an alkylsiloxane with two or more polymerizable reactive groups.
[19] The soft ocular lens according to [18], wherein the substrate is obtained by polymerizing a (macro)monomer composition containing an alkylsiloxane with two or more polymerizable reactive groups and optionally at least one selected from an alkylsiloxane with one polymerizable reactive group, a fluoroalkyl (meth)acrylate, an alkyl (meth)acrylate and a dialkylaminoalkyl (meth)acrylate.
[20] The soft ocular lens according to [19], wherein the (macro)monomer composition contains 20 to 50% by mass of the alkylsiloxane with two or more polymerizable reactive groups and the alkylsiloxane with one polymerizable reactive group, and 30 to 65% by mass of the fluoroalkyl (meth)acrylate.
[21] The soft ocular lens according to any one of [18] to [20], wherein the polymerizable reactive group is a (meth)acrylate group.
[22] The soft ocular lens according to any one of [1] to [21], wherein the polysiloxane unit of the (co)polymer present on the surface of the substrate has SiOH, Si-CH₂-OH, or O-C=O bonded to Si.
[23] The soft ocular lens according to any one of [1] to [22], wherein the hydrophilic polymer comprises at least one selected from the group consisting of a polyvinylpyrrolidone (PVP), a polyacrylamide, a polyacrylamide a nitrogen atom of which is substituted with an alkyl group (for example, a poly(N,N-diethylacrylamide), a poly(N,N-dimethylacrylamide), a poly(N-isopropylacrylamide), or the like), a poly(N-vinylacetamide), a poly(N-vinylformaldehyde), a poly(N-vinylisobutyramide), a polyamide epichlorohydrin, a poly(2-oxazoline), a poly(2-ethyl-2-oxazoline), a polyacrylic acid, a compound having a hydrophilic group (for example, a hydroxyl ethyl group or the like) on an oxygen atom of a polyacrylic acid (for example, HEMA or the like), a polymethacrylic acid, a polylysine, a polymaleic acid, alginic acid, chondroitin sulfate, pectin, hyaluronic acid, chitosan, colominic acid, pullulan, dextran, cellulose, a polyethylene glycol (PEG), a PEG- containing block copolymer (for example, a block copolymer of PEG and a polyacrylic acid, a block copolymer of PEG and a polyamino acid such as a polylactic acid, or the like), a PEG-containing surfactant (such as PEG having a long chain alkyl group at one end), a polymer in which PEG is modified at the end (for example, PEG having a methyl group, an ethyl group, a benzyl group, a dibenzylpropyl group, a dimethylaminoethyl group or the like at the end), a polyphosphorylcholine, a polytetrahydrofuran, a polyvinyl alcohol, a polymethyl vinyl ether, a polyethyleneimine (PEI), a polyallylamine, a polydiallylamine, a polymethyldiallylamine, a poly(N-vinylamine), a poly(vinyl-N-methylpyridinium salt), a polyvinyl phosphoric acid, a polyvinyl sulfonic acid, a polystyrene sulfonic acid, a polystyrene sulfonate salt, a poly(3-sulfopropyl potassium methacrylate), a hydroxyethyl cellulose, a hydroxypropyl methyl cellulose, a polydimethyldiallyl ammonium salt, a poly(vinyl methacrylic acid), a poly(2-vinylpyridine-N-oxide), a copolymer obtained by crosslinking two or more of these hydrophilic polymers (for example, an ethylene glycol-crosslinked polyacrylic acid polymer (for example, CLPAH-100)), and a hydrophilic (co)polymer having any of these hydrophilic polymers as a branched structure (for example, PEG derivatives in which at least one of these hydrophilic polymers is bonded to PEG as a branched structure).
[24] The soft ocular lens according to [23], wherein the hydrophilic polymer comprises a polyvinylpyrrolidone, a polyacrylic acid, an ethylene glycol-crosslinked polyacrylic acid polymer, a starch-grafted polyacrylic acid, PEG, a PEG-containing block copolymer, alginic acid, chondroitin sulfate, hyaluronic acid, pectin, a hydroxyethyl cellulose, dextran, a polyvinyl alcohol, a polyethyleneimine, a polyglutamic acid, or a polyacrylamide.
[25] The soft ocular lens according to [24], wherein the hydrophilic polymer includes polyvinyl pyrrolidone, an ethylene glycol-crosslinked polymer of polyacrylic acid, polyacrylic acid, chondroitin sulfate, hydroxyethyl cellulose, polyvinyl alcohol, a block copolymer containing PEG, or PEG.
[26] The soft ocular lens according to any one of [1] to [25], wherein the soft ocular lens has an oxygen permeability (Dk value) of 150 or more.
[27] A method for producing a soft ocular lens, comprising steps of:
   subjecting a contact lens substrate containing a (co)polymer with an alkyl group-containing polysiloxane structure to plasma treatment in an inert gas atmosphere to form a radical on the surface of the substrate; and
   immersing the substrate in an aqueous solution of a hydrophilic polymer with a structure capable of resonating with a radical on a carbon atom to form a coating layer containing the hydrophilic polymer.
[28] The method according to [27], wherein the radical comprises a Si · radical and a Si-alkyl · radical.
[29] The method according to [28], wherein the radical further comprises a Si-alkylene-O-O · radical.
[30] The method according to any one of [27] to [29], wherein immediately after the plasma treatment, at least 10% or more of C bonded to Si present on the surface of the substrate are radicals.
[31] The method according to [30], wherein immediately after the plasma treatment, at least 15% or more of Si and C bonded to Si present on the surface of the substrate are radicals.
[32] The method according to any one of [27] to [31], wherein immediately after the plasma treatment, at least 20% of alkyl group-containing polysiloxane units present on the surface of the substrate are radicals.
[33] The method of any one of [27] to [32], wherein the plasma is generated at a low frequency of 50 Hz or 60 kHz and a power of 10 to 150 W.
[34] The method according to [33], wherein the inert gas is introduced into a reaction chamber at a gas pressure of 2 Pa to 30 Pa and a rate of 1 sccm to 100 sccm.
[35] The method according to [33] or [34], wherein the plasma treatment is performed for 5 seconds to 2 minutes.
[36] The method according to [35], wherein the plasma is generated at a power of 60 to 150 W, and the plasma treatment is performed for 50 seconds to 2 minutes.
[37] The method according to any one of [27] to [32], wherein the plasma is generated at 3 to 30 mA by glow discharge.
[38] The method according to any one of [27] to [37], wherein the inert gas is N₂ gas or Ar gas.
[39] The method according to any one of [27] to [38], wherein the substrate is obtained by polymerizing a (macro)monomer composition containing 20% by mass or more of an alkyl group-containing polysiloxane.
[40] The method according to [39], wherein the substrate is obtained by polymerizing a (macro)monomer composition containing 30% by mass or more of an alkyl group-containing polysiloxane.
[41] The method according to any one of [27] to [40], wherein the (co)polymer with an alkyl group-containing polysiloxane structure is obtained by polymerizing a (macro)monomer composition containing an alkylsiloxane with two or more polymerizable reactive groups.
[42] The method according to [41], wherein the substrate is obtained by polymerizing a (macro)monomer composition containing an alkylsiloxane with two or more polymerizable reactive groups and optionally at least one selected from an alkylsiloxane with one polymerizable reactive group, a fluoroalkyl (meth)acrylate, an alkyl (meth)acrylate and a dialkylaminoalkyl (meth)acrylate.
[43] The method according to [42], wherein the (macro)monomer composition contains 20 to 50% by mass of the alkylsiloxane with two or more polymerizable reactive groups and the alkylsiloxane with one polymerizable reactive group, and 30 to 65% by mass of the fluoroalkyl (meth)acrylate.
[44] The method according to any one of [41] to [43], wherein the polymerizable reactive group is a (meth)acrylate group.
[45] The method according to any one of [27] to [44], wherein the hydrophilic polymer is water-soluble and has an alkyl group and/or an alkylene group and/or a methine group, and an atom with a non-covalent electron pair or a double bond, wherein a carbon of the alkyl group or the alkylene group or the methine group is present adjacent to the atom with a non-covalent electron pair or the double bond.
[46] The method according to any one of [27] to [45], wherein the hydrophilic polymer includes at least one selected from the group consisting of a polyvinylpyrrolidone (PVP), a polyacrylamide, a polyacrylamide a nitrogen atom of which is substituted with an alkyl group (for example, a poly(N,N-diethylacrylamide), a poly(N,N-dimethylacrylamide), a poly(N-isopropylacrylamide), and the like), a poly(N-vinylacetamide), a poly(N-vinylformaldehyde), a poly(N-vinylisobutyramide), a polyamide epichlorohydrin, a poly(2-oxazoline), a poly(2-ethyl-2-oxazoline), a polyacrylic acid, a compound having a hydrophilic group (for example, a hydroxyl ethyl group or the like) on an oxygen atom of a polyacrylic acid (for example, HEMA or the like), a polymethacrylic acid, a polylysine, a polymaleic acid, alginic acid, chondroitin sulfate, pectin, hyaluronic acid, chitosan, colominic acid, pullulan, dextran, cellulose, a polyethylene glycol (PEG), a PEG- containing block copolymer (for example, a block copolymer of PEG and a polyacrylic acid, a block copolymer of PEG and a polyamino acid such as a polylactic acid, or the like), a PEG-containing surfactant (for example, PEG having a long chain alkyl group at one end), a polymer in which PEG is modified at the end (for example, PEG having a methyl group, an ethyl group, a benzyl group, a dibenzylpropyl group, a dimethylaminoethyl group or the like at the end), a polyphosphorylcholine, a polytetrahydrofuran, a polyvinyl alcohol, a polymethyl vinyl ether, a polyethyleneimine (PEI), a polyallylamine, a polydiallylamine, a polymethyldiallylamine, a poly(N-vinylamine), a poly(vinyl-N-methylpyridinium salt), a polyvinyl phosphoric acid, a polyvinyl sulfonic acid, a polystyrene sulfonic acid, a polystyrene sulfonate salt, a poly(3-sulfopropyl potassium methacrylate), a hydroxyethyl cellulose, a hydroxypropyl methyl cellulose, a polydimethyldiallyl ammonium salt, a poly(vinyl methacrylic acid), a poly(2-vinylpyridine-N-oxide), a copolymer obtained by crosslinking two or more of these hydrophilic polymers (for example, an ethylene glycol-crosslinked polyacrylic acid polymer (for example, CLPAH-100)), and a hydrophilic (co)polymer having any of these hydrophilic polymers as a branched structure (for example, PEG derivatives in which at least one of these hydrophilic polymers is bonded to PEG as a branched structure).
[47] The method according to [46], wherein the hydrophilic polymer includes a polyvinylpyrrolidone, a polyacrylic acid, an ethylene glycol-crosslinked polyacrylic acid polymer, a starch-grafted polyacrylic acid, PEG, a PEG-containing block copolymer, alginic acid, chondroitin sulfate, hyaluronic acid, pectin, a hydroxyethyl cellulose, dextran, a polyvinyl alcohol, a polyethyleneimine, a polyglutamic acid, or a polyacrylamide.
[48] The method according to [47], wherein the hydrophilic polymer comprises a polyvinyl pyrrolidone, an ethylene glycol-crosslinked polyacrylic acid polymer, a polyacrylic acid, chondroitin sulfate, hydroxyethyl cellulose, a polyvinyl alcohol, a PEG-containing block copolymer, or PEG.
[49] The method according to any one of [27] to [48], wherein the substrate subjected to the plasma treatment is held in an oxygen-containing atmosphere for a short time (preferably within 10 seconds).
[50] The method according to [49], wherein the oxygen concentration in the oxygen-containing atmosphere is 0.5 to 20% by mass.
[51] The method according to [50], wherein the oxygen concentration in the oxygen-containing atmosphere is 0.8 to 10% by mass.
[52] The method according to any one of [27] to [51], wherein the substrate on which the radical has been formed is immersed in the aqueous solution of the hydrophilic polymer within 10 seconds after the plasma treatment.
[53] The method according to any one of [27] to [52], wherein the substrate on which the radical has been formed is immersed in the aqueous solution of the hydrophilic polymer at a temperature of 5 to 135°C for 20 minutes to 2 hours.
[54] The method according to [53], wherein the substrate on which the radical has been formed is immersed in the aqueous solution of the hydrophilic polymer at a temperature of 10 to 30°C for 30 minutes to 1 hour, and then heated at a temperature of 80 to 135°C for 20 minutes to 2 hours.
[55] The method according to any one of [27] to [54], wherein the concentration of the hydrophilic polymer in the aqueous solution is 0.01% by mass to 1% by mass.
[56] The method according to any one of [27] to [55], wherein after the immersion, a heat treatment is performed in water or a buffer solution.
[57] The method according to [56], wherein the heat treatment is performed in a lens storage solution at a temperature of 80 to 135°C for 20 minutes to 2 hours.
[58] The method according to any one of [27] to [57], wherein the coating layer has a thickness of 1 nm to 5 µm.
[59] A soft ocular lens produced by the method according to any one of [27] to [58].

As described above, according to the present invention, a substrate containing a (co)polymer with a hydrocarbon group, preferably an alkyl group-containing polysiloxane structure, is subjected to plasma treatment in an inert gas atmosphere without using a gas containing a carbon atom or an oxygen atom to activate the surface of the substrate. When activated by plasma, a compound with an alkyl group-containing polysiloxane structure generates Si · radicals or Si-CₙH₂ₙ · radicals (typically, Si-CH₂ · radicals), but when plasma is formed with a gas containing oxygen or carbon, active species of oxygen or carbon form stable chemical bonds with radicals on the surface of the substrate. That is, the Si · radical forms a stable Si-O bond with oxygen, and the Si-CₙH₂ₙ · radical forms Si-CₙH₂ₙ-C with carbon, so that the radicals on the surface of the substrate are reduced. On the other hand, when a (co)polymer with an alkyl group-containing polysiloxane structure is subjected to plasma treatment in an inert gas atmosphere, the inert gas does not react with radicals, and thus the concentrations of Si · radicals and Si-CₙH₂ₙ · radicals on the surface of the substrate increase. When such a substrate is immersed in an aqueous solution of a hydrophilic polymer, radicals on the surface of the substrate, particularly Si-CₙH₂ₙ · radicals, are radically transferred to the hydrophilic polymer, and radicals are generated in the hydrophilic polymer. As a result, recombinations of radicals of the substrate and the hydrophilic polymer are generated, whereby the substrate and the hydrophilic polymer are bonded. When plasma treatment is performed with a gas containing oxygen or carbon, the bonding frequency between the substrate and the hydrophilic polymer is low, and thus sufficient hydrophilization cannot be achieved. However, in the method according to the present invention wherein the substrate and the hydrophilic polymer are bonded to each other using a large number of radicals generated in the substrate and the hydrophilic polymer, the bonding frequency between the substrate and the hydrophilic polymer is high, and sufficient hydrophilization can be achieved by one plasma treatment.

### BRIEF DESCRIPTION OF DRAWINGS

FIG. 1 is a conceptual diagram schematically showing a structure in the vicinity of the surface of a lens according to an embodiment of the present invention.
FIG. 2 shows spectra in the Ois region obtained by XPS analysis of a sample of Example 1.
FIG. 3 shows spectra in the Cis region obtained by XPS analysis of the sample of Example 1.
FIG. 4 shows spectra in the Cis region obtained by XPS analysis of the sample of Example 2.
FIG. 5 shows spectra in the Si₂ₚ region obtained by XPS analysis of a sample of Synthesis Example 1.
FIG. 6 shows spectra in the Si₂ₚ region obtained by XPS analysis of a sample of Synthesis Example 1 after plasma treatment.
FIG. 7 shows spectra in the Si₂ₚ region obtained by XPS analysis of the sample of Example 1.
FIG. 8 shows spectra in the Si₂ₚ region obtained by XPS analysis of a sample of Reference Example 1.
FIG. 9 shows spectra in the Ois region obtained by XPS analysis of a sample of Example 3.
FIG. 10 shows spectra in the Cis region obtained by XPS analysis of a substrate after plasma treatment in Example 3.
FIG. 11 shows spectra in the Cis region obtained by XPS analysis of the sample of Example 3.

### DESCRIPTION OF EMBODIMENTS

Embodiments of the present invention will be described in detail. However, the present invention should not be understood as limited to the following embodiments.

As used herein, the term "(macro)monomer" means a macromonomer and/or a monomer. In addition, as used herein, the term (meth)acryloyl means methacryloyl and/or acryloyl, and the terms (meth)acryl, (meth)acrylate, and the like are used in the similar terminology. Similarly, the term "(co)polymer" means a copolymer or a polymer.

As used herein, the "Si-alkyl · radical" has the same meaning as the "Si-CₙH₂ₙ · radical" and is sometimes abbreviated as "Si-C · radical". Similarly, as used herein, the "Si-alkylene-O-O · radical" has the same meaning as "Si-CₙH₂ₙ-O-O · radical" and is sometimes abbreviated as "Si-C-O-O · radical".

A method for producing a soft ocular lens of the present invention comprises: subjecting a contact lens substrate containing a polymer capable of forming radicals by plasma to plasma treatment in an inert gas atmosphere to form a radical on a surface of the substrate; and immersing the substrate on which the radical has been formed in an aqueous solution of a hydrophilic polymer to produce radical rearrangement to the hydrophilic polymer, thereby forming a coating layer of the hydrophilic polymer. The soft ocular lens of the present invention is a lens obtained by such a production method and comprising a coating layer containing a hydrophilic polymer on the surface of a substrate, and exhibits high hydrophilicity with a single coating layer. Details will be described below.

### 1. Substrate

A substrate used in the soft ocular lens of the present invention contains a polymer capable of forming radicals of silicon or carbon by plasma of an inert gas. Such a polymer is usually composed of silicon, oxygen, carbon and hydrogen, and is preferably a (co)polymer with an alkyl group-containing polysiloxane structure, and more preferably a (co)polymer with a structural unit represented by the following formula (1): 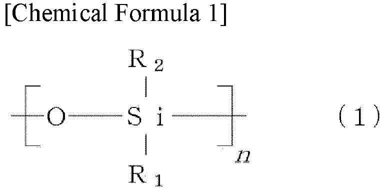 wherein R₁ and R₂ each independently represent an alkyl group or a hydrogen atom, and may be different for each structural unit, or may be the same in some or all of the structural units, provided that at least one R₁ or R₂ is a hydrocarbon group, and n represents an integer of 2 or more.

The alkyl group is preferably an alkyl group with 10 or less carbon atoms, more preferably an alkyl group having 1 to 5 carbon atoms, and still more preferably an alkyl group with 1 to 3 carbon atoms, in order to reduce water repellency and hydrophobicity of the substrate itself.

On the other hand, in order to form many radicals on the substrate by plasma treatment, preferably, at least one of R₁ and R₂ is an alkyl group per siloxane unit represented by the formula (1).

Examples of the alkyl group include a methyl group, an ethyl group, a propyl group, an isopropyl group, a butyl group, a t-butyl group, a decyl group, and the like, and a methyl group, an ethyl group, a propyl group, and an isopropyl group are preferable, a methyl group and an ethyl group are more preferable, and a methyl group is most preferable.

n represents the number of structural units represented by the formula (1) and is usually in the range of 2 to 1500, preferably 80 or more, and more preferably 100 or more. In particular, n is preferably 100 to 1400, more preferably 120 to 950, and still more preferably 130 to 700.

The (co)polymer with an alkyl group-containing polysiloxane structure is usually obtained by polymerizing a polysiloxane compound with a plurality of polymerizable functional groups and one or more alkyl groups per molecule (hereinafter, abbreviated as component A) or component A with another polymerizable compound (hereinafter, abbreviated as component B).

As the polymerizable functional group of component A, a radically polymerizable functional group is preferable, and a group with a carbon-carbon double bond is more preferable. Examples of preferable polymerizable functional groups include a vinyl group, an allyl group, a (meth)acryloyl group, an α-alkoxymethylacryloyl group, a maleic acid residue, a fumaric acid residue, an itaconic acid residue, a crotonic acid residue, an isocrotonic acid residue, and a citraconic acid residue. Among them, a (meth)acryloyl group is particularly preferable because it has high polymerizability.

Examples of the alkyl group of component A include the same alkyl groups as the alkyl groups of the structural units represented by the formula (1), and preferred alkyl groups are also the same.

The weight average molecular weight of component A is preferably 6,000 or more, more preferably in the range of 9,000 to 160,000, and still more preferably in the range of 10,000 to 70,000. Also, the dispersity (value obtained by dividing the weight average molecular weight by the number average molecular weight) of component A is preferably 6 or less, more preferably 3 or less, still more preferably 2 or less, and particularly preferably 1.5 or less. As used herein, the number average molecular weight, the weight average molecular weight, and the dispersity of component A are a number average molecular weight in terms of polystyrene measured by a gel permeation chromatography method (GPC method) using chloroform as a solvent.

Examples of component B include a polysiloxane compound with one or more hydrocarbon groups and one polymerizable functional group (usually at one end) per molecule (hereinafter, abbreviated as component B1), a hydrophobic (meth)acrylate with one or more polymerizable functional groups but without a siloxane structure (hereinafter, abbreviated as component B2), a hydrophilic (meth)acrylate with one or more polymerizable functional groups but without a siloxane structure (hereinafter, abbreviated as component B3), and other monomers (hereinafter, abbreviated as component B4).

The polymerizable functional group of component B 1 includes the same as the polymerizable functional group of component A, and preferable polymerizable functional groups include a vinyl group, an allyl group, a (meth)acryloyl group, an α-alkoxymethylacryloyl group, a maleic acid residue, a fumaric acid residue, an itaconic acid residue, a crotonic acid residue, an isocrotonic acid residue, and a citraconic acid residue; and a (meth)acryloyl group is particularly preferable.

Examples of the alkyl group of component B1 also include the same alkyl groups as the alkyl groups of the structural units represented by the formula (1), and preferred alkyl groups are also the same, as in component A.

The weight average molecular weight of component B 1 is preferably 2,000 or more, more preferably in the range of 2,000 to 70,000, and still more preferably in the range of 5,000 to 10,000. The dispersity of component B 1 is also preferably 6 or less, more preferably 3 or less, still more preferably 2 or less, and particularly preferably 1.5 or less, as in component A.

As demonstrated in examples below, the plasma treatment according to the present invention generates a Si-alkyl · radical in the alkyl group-containing polysiloxanes described above, transfers the radical to a hydrophilic polymer, and hydrophilizes the surface of the substrate through a bond between the alkyl group-containing polysiloxane and the hydrophilic polymer. Therefore, a substrate of the present invention may be composed of a (co)polymer obtained by polymerizing a composition containing component A and optionally component B1. In addition, as demonstrated in Reference Example 2 later, the polymers of component A and component B 1 are localized on the surface of the substrate, and the amount of radicals generated by the plasma treatment is hardly affected by the contents of these components, and sufficient hydrophilization can be achieved even with a relatively low content thereof. Therefore, the content of component A and component B 1 may be 10% by mass or more, preferably 20% by mass or more, and more preferably 30% by mass or more in the composition. On the other hand, the content of these components is preferably determined in consideration of the content of other monomer components necessary for imparting other characteristics as well as the required oxygen permeability, and from this point of view, it is usually 80% by mass or less, preferably 70% by mass or less, more preferably 60% by mass or less, and still more preferably 50% by mass or less.

Examples of component B2 include a fluoroalkyl (meth)acrylate, an alkyl (meth)acrylate, a dialkylaminoalkyl (meth)acrylate, a glycol (meth)acrylate, (meth)acrylate with an aryl group, a (meth)acrylate with another additional double bond, and other (meth)acrylates.

As the (meth)acrylate with a fluoroalkyl group, a (meth)acrylate with a fluoroalkyl group having 1 to 20 carbon atoms is preferable, and a (meth)acrylate with a fluoroalkyl group having 1 to 10 carbon atoms is more preferable.

One (meth)acrylate with a fluoroalkyl group may be used solely, or two or more thereof may be used in combination. The content of a (meth)acrylate(s) with a fluoroalkyl group can be 0 to 80% by mass, preferably 10 to 75% by mass, more preferably 20 to 70% by mass, and more preferably 30 to 65% by mass in a (macro)monomer composition.

As the alkyl (meth)acrylate, a (meth)acrylate with an alkyl group having 1 to 20 carbon atoms is preferable, and a (meth)acrylate with an alkyl group having 5 to 15 carbon atoms is more preferable.

One alkyl (meth)acrylate may be used solely, or two or more thereof may be used in combination. The content of an alkyl (meth)acrylate(s) can be 0 to 30% by mass, preferably 2 to 20% by mass, and more preferably 3 to 10% by mass in a (macro)monomer composition.

As the dialkylaminoalkyl (meth)acrylate, a (meth)acrylate with a dialkylaminoalkyl group having 3 to 20 carbon atoms is preferable, and a (meth)acrylate with an alkyl group having 4 to 10 carbon atoms is more preferable.

As the glycol (meth)acrylate, a (meth)acrylate with an alkylene glycol or an alkoxydialkylene glycol having 3 to 20 carbon atoms is preferable, and a (meth)acrylate with an alkylene glycol or an alkoxydialkylene glycol having 5 to 10 carbon atoms is more preferable.

The (meth)acrylate with an aryl group is preferably a (meth)acrylate with a monocyclic or bicyclic aryl group having 5 to 12 carbon atoms, and examples thereof include phenyl (meth)acrylate, phenoxyethyl (meth)acrylate, benzyl (meth)acrylate, bisphenol A dimethacrylate, and the like. Examples of the (meth)acrylate with another additional double bond include a (meth)acrylate with a vinyl group, an allyl group, a maleic acid residue, a fumaric acid residue, an itaconic acid residue, a crotonic acid residue, an isocrotonic acid residue, or a citraconic acid residue; and vinyl methacrylate is preferable. Examples of the other (meth)acrylates include trimethylolpropane trimethacrylate, pentaerythritol tetramethacrylate, and the like.

The content of the glycol (meth)acrylate, the (meth)acrylate with an aryl group, the (meth)acrylate with another additional double bond, and the other (meth)acrylates is usually 30% by mass or less, and preferably 20% by mass or less in a (macro)monomer composition.

Examples of component B3 include methacrylic acid, acrylic acid, itaconic acid, 2-hydroxyethyl methacrylate, 2-hydroxyethyl acrylate, 2-hydroxypropyl methacrylate, 2-hydroxypropyl acrylate, glycerol methacrylate, polyethylene glycol methacrylate, and the like.

Examples of component B4 include a monomer with a vinyl group, an allyl group, a maleic acid residue, a fumaric acid residue, an itaconic acid residue, a crotonic acid residue, an isocrotonic acid residue, or a citraconic acid residue, or a monomer in which these polymerizable reactive groups are bonded to an amide; and a monomer with a vinyl group and a monomer with an amide-bond polymerizable reactive group are preferable.

The content of component B3 and component B4 can be each independently 0 to 50% by mass, and preferably 1 to 40% by mass in a (macro)monomer composition, depending on the intended use of the individual monomers.

Note that the (co)polymers with an alkyl group-containing polysiloxane structure and a method for producing the same are described in PATENT LITERATURES 2, 3, 5, 8, 11, and 16, and the like, and the contents thereof are incorporated herein by reference.

The substrate may contain other components such as an ultraviolet absorber, a dye, a colorant, a wetting agent, a slipping agent, a pharmaceutical or nutraceutical ingredient, a compatibilizing component, an antibacterial component, and a mold release agent. Any of these components may be contained in a non-reactive or copolymerized form. For example, when the contact lens contains an ultraviolet absorber, the eye of a contact lens wearer can be protected from harmful ultraviolet rays. In addition, when the contact lens contains a colorant, the contact lens is colored, identification becomes easy, and convenience in handling is improved.

When an ultraviolet absorber is contained, the content thereof is 0.01 to 20 parts by weight, more preferably 0.05 to 10 parts by weight, and still more preferably 0.1 to 2 parts by weight, in relation to 100 parts by weight of component A. When a colorant is contained, the content thereof is 0.00001 to 5 parts by weight, more preferably 0.0001 to 1 parts by weight, and still more preferably 0.0001 to 0.5 parts by weight, in relation to 100 parts by weight of component A.

The (macro)monomer composition can contain any solvent to improve compatibility of each component. The % by mass of each of the above components in the composition refers to the content in a composition consisting of (macro)monomers.

The solvent is not particularly limited, but a tertiary alcohol or a saturated carboxylic acid is preferably used.

In the polymerization, a thermal polymerization initiator or a photopolymerization initiator can be used as necessary. As the thermal polymerization initiator, an azo compound or a peroxide is preferable. Examples of the photopolymerization initiator include various benzoin derivatives.

As a method for molding the substrate by polymerizing the (macro)monomers, a known method can be used. For example, a method of obtaining a round rod- or a plate-like polymer and processing the polymer into a desired shape by cutting it, a mold polymerization method, a spin cast polymerization method, or the like can be used.

### 2. Plasma treatment

According to the present invention, a substrate containing a (co)polymer with an alkyl group-containing polysiloxane structure is subjected to plasma treatment in an inert gas atmosphere without using a gas containing a carbon atom or an oxygen atom. When a compound with an alkyl group-containing polysiloxane structure is activated by plasma, Si . radicals or Si-alkyl (CₙH₂ₙ) · radicals are generated, but an inert gas prevents radicals on the surface of the substrate from being stabilized by active species such as oxygen and carbon. As a result, radicals generated on the surface of the substrate are transferred to the hydrophilic polymer, and the hydrophilic polymer can be efficiently bonded to the surface of the substrate through recombination of these radicals.

An alkyl group-containing polysiloxane compound can form Si · radicals and Si-CₙH₂ₙ · radicals by applying thereto plasma with a small intensity for a short time. On the other hand, when the plasma intensity is high or the irradiation time is long, amorphous silicon monoxide is likely to be generated, and as taken out from the device, the amorphous silicon monoxide may be oxidized to glassy silicon dioxide (NON PATENT LITERATURE 4). Among the generated radicals, the Si-CₙH₂ₙ · radical is most likely to produce radical rearrangement to the hydrophilic polymer (NON PATENT LITERATURE 4). Therefore, it is preferable to perform the plasma treatment under mild conditions in order to form a large number of radicals on the surface of the substrate and to produce more radical rearrangements to the hydrophilic polymer. On the other hand, under conditions where Si · radicals are likely to be generated, crosslinking is facilitated by condensation of silanol groups between alkyl group-containing polysiloxane compounds. When a hydrophilic polymer is present in the vicinity thereof at the time of the condensation, the hydrophilic polymer is involved in a condensation reaction and entangled with the alkyl group-containing polysiloxane compound, and this structure improves resistance to rubbing. Therefore, it is preferable to set the plasma treatment condition also from such a viewpoint.

As the inert gas, N₂, Ar, He, and Ne can be used, and among them, N₂ is preferable. He has a small atomic weight and can generate stable plasma with small power. However, He is a rare gas and increases the cost. The same applies to Ne. Ar is relatively abundant in the air but does not necessarily have an advantage over N₂.

As a plasma generation method, low-frequency discharge and glow discharge are preferable.

The low-frequency discharge is preferably done at 10 kHz to 10 Hz, more preferably at 1 kHz or less, and still more preferably at 100 Hz or less. For such a low-frequency discharge, a low-frequency discharge of 50 Hz or 60 Hz with which a commercial power source can be used is convenient.

The power is preferably changed depending on the size of an electrode, but may be usually in the range of 10 to 150 W, more preferably in the range of 60 to 120 W, and particularly preferably in the range of 70 to 100 W. For a parallel plate electrode having a diameter of about 10 cm, 20 to 100 W is preferable, and 30 to 80 W is more preferable. For a parallel plate electrode having a diameter of 20 cm, 40 to 150 W is preferable, 60 to 120 W is more preferable, and 70 to 100 W is particularly preferable.

The plasma irradiation period of time is preferably determined dependent on an introduction rate and exhaust rate of an inert gas as described later, but may be usually set between 5 seconds and 2 minutes. From the viewpoint of improvement of hydrophilicity, production efficiency, and introduction of silanol group condensation reactions between alkyl group-containing polysiloxane compounds, the time is preferably from 20 seconds to 1 minute and 30 seconds, and more preferably from 20 seconds to 1 minute.

In glow discharge, plasma is preferably generated at a voltage of 300 to 800 V and a current of 3 to 30 mA. Also, in glow discharge, the plasma irradiation time may be usually set between 1 second and 1 minute, preferably between 3 seconds and 20 seconds, and more preferably between 7 seconds and 15 seconds.

As the introduction rate and exhaust rate of the inert gas increase, the ratio of the inert gas to the plasma increases, the gas temperature decreases, and the concentration of plasma decreases. Therefore, the intensity of the plasma also depends on the introduction rate and exhaust rate of the inert gas and can be lowered by increasing the introduction rate and the exhaust rate. These are preferably determined dependent on the plasma irradiation time. When the gas introduction rate is too fast, the spatial intensity of the plasma may become nonuniform, but with inert gases such as N₂, Ar, He, and Ne, this effect is small due to the high diffusion rate.

The introduction rate and exhaust rate of the inert gas can be explained by the pressure and introduction amount of the inert gas at the time of plasma generation, and they can be used as alternative indices of the introduction rate and exhaust rate of the inert gas. From these viewpoints, the pressure of the inert gas is preferably determined in the range of 1 Pa to 50 Pa, more preferably in the range of 2 Pa to 30 Pa, and still more preferably in the range of 5 Pa to 25 Pa according to the plasma irradiation period of time. In addition, the introduction amount of the inert gas is preferably in the range of 1 sccm to 100 sccm, more preferably in the range of 3 sccm to 50 sccm, and still more preferably in the range of 5 sccm to 30 sccm.

The plasma treatment in an inert gas atmosphere according to the present invention allow many radicals to be formed on the surface of the substrate. More specifically, immediately after plasma treatment, radicals can be formed in at least 20% of alkyl group-containing polysiloxane units present on the surface of the substrate. In particular, when the substrate is exposed to a plasma of an inert gas under the mild conditions described above, 14% or more of Si atoms of the alkyl group-containing siloxane units present on the surface of the substrate can be converted into Si · radicals. In addition, 11% or more of the alkyl groups (for example, methyl groups) of the alkyl group-containing siloxane units present on the surface of the compound can be converted into Si-CₙH₂ₙ · radicals. Therefore, where the number of alkyl groups of the alkyl group-containing siloxane unit is two, by selecting preferable plasma treatment conditions, radicals can be formed in 36% or more of the alkyl group-containing siloxane units present on the surface of the substrate, and most of the radicals can be used for bonding to the hydrophilic polymer described later.

As used herein, the "X of the alkyl group-containing siloxane unit(s) present on the surface" means X (for example, a Si atom or a methyl group) that can be measured when the substrate is subjected to XPS analysis at a water vapor pressure of 5 mbar with an XPS device such as EnviroESCA. The angle of the detector is 70°, and the detection depth of XPS in this case is about 5 nm.

Soft ocular lenses obtained by plasma treatment under the mild conditions have a sharp peak of Si₂ₚ, and a full width at half maximum of less than 2.1 eV in the XPS measurement for the Si region. These indicate limited oxidation of the Si atoms of the alkyl group-containing siloxane units present on the surface. In addition, the peak of Si₂ₚ was curve fitted for each oxidation state, and it has been found that 60% or more of Si atoms present on the surface are bonded to two O atoms, indicating that oxidation is not progressed from the original state of PDMS.

The lenses are characterized in that many radicals can be formed on the surface of the substrate while suppressing oxidation of the alkyl group-containing siloxane.

When the substrate is placed in an atmosphere in which oxygen exists after plasma treatment, the Si-CₙH₂ₙ · radical reacts with oxygen to irreversibly form a Si-CₙE_{En}-O-O · radical. This radical is stable for several minutes, extracts hydrogen from the hydrophilic polymer which is prone to form a radical, and produces radical rearrangement. This radical may be also utilized to recombine with a radical of the hydrophilic polymer to bond the hydrophilic polymer to the substrate (NON PATENT LITERATURES 5 and 6).

On the other hand, the Si · radical also reacts with oxygen to irreversibly form a Si-O-O · radical, and this radical produces radical rearrangement to the hydrophilic polymer and is bonded to the hydrophilic polymer to form Si-O-O-R (R represents a hydrocarbon of the hydrophilic polymer), but this structure is unstable, and thus is finally dissociated to form Si-OH (NON PATENT LITERATURE 5). When the Si-CₙH₂ₙ · radical is exposed to oxygen for several hours, the Si-CₙH₂ₙ · radical is converted into Si-CₙH₂ₙ-OH, O-C=O bonded to Si. 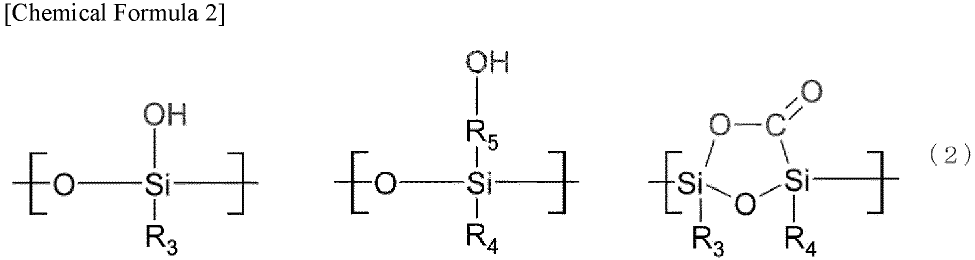 wherein R₃ and R₄ represent an alkyl group, and R₅ represents alkylene; and preferred alkyl groups are the same as or correspond to R₁ and R₂ in formula (1).

The ratio of Si-CₙH₂ₙOH may be 8% or more of the alkyl groups (for example, methyl groups) of the alkyl group-containing siloxane units present on the surface of the substrate, and O-C=O may be 3% or more, resulting in hydrophilicity on the surface of the substrate. However, if the substrate is continuously exposed to an oxygen-containing atmosphere, hydrophobic siloxane moieties move to the surface, and the surface of the substrate becomes hydrophobic. More specifically, the hydrophilic groups of the formula (2) are formed several minutes after radical irradiation, and subsequently the surface of the substrate gradually becomes hydrophobic.

It therefore is not preferable that the substrate after plasma treatment is placed in an atmosphere in which oxygen exists for a long time. In that case, radicals that bond the hydrophilic polymer to the substrate decrease as a whole, and the bonding efficiency between the hydrophilic polymer and the substrate decreases. On the other hand, in order to use a Si-CₙH₂ₙ-O-O · radical to generate bonding with the hydrophilic polymers with higher efficiency, it is preferable to expose the substrate to an oxygen-containing atmosphere only for a short time after plasma treatment. For example, the Si-CₙH₂ₙ-O-O · radical can be utilized by exposing the substrate to an oxygen-containing atmosphere within 10 seconds. It is preferable to expose the substrate to an oxygen-containing atmosphere within 5 seconds, and it is more preferable to expose the substrate to an oxygen-containing atmosphere within 3 seconds. Also, from the same viewpoint, if it takes a long time until the substrate is immersed in a hydrophilic polymer solution after plasma treatment, it is preferable to place the substrate in an atmosphere with an oxygen concentration of 1% by mass or less, preferably in an inert gas atmosphere.

### 3. Hydrophilization treatment with hydrophilic polymer

According to the present invention, the substrate after plasma treatment is immersed in an aqueous solution of a hydrophilic polymer to hydrophilize the surface of the substrate. More specifically, a substrate having a surface on which Si · radicals, Si-CₙH₂ₙ · radicals and optionally Si-CₙH₂ₙ-O-O · radicals are formed by plasma treatment is immersed in an aqueous solution of a hydrophilic polymer, the Si-CₙH₂ₙ · radicals and optionally the Si-CₙH₂ₙ-O-O · radicals on the surface of the substrate allow radicals to be transferred to the hydrophilic polymer, and both are bonded by recombination of the radicals generated in the substrate and the hydrophilic polymer.

Therefore, the hydrophilic polymer needs to be a compound capable of forming a radical by hydrogen being extracted therefrom by a radical generated on the surface of the substrate. In this respect, as demonstrated in examples later, even decane, i.e., an alkane, can be bonded to alkyl group-containing polysiloxane compounds, which form a Si-CₙH₂ₙ · radical (typically a Si-CH₂ · radical) with plasma treatment. That is, a compound having a structure capable of resonating with a radical on a carbon atom can be bonded to an alkyl group-containing polysiloxane compound, and it may not be a hydrophilic polymer.

Therefore, various hydrophilic polymers can be used as the hydrophilic polymer as long as the hydrophilic polymer has a structure capable of resonating with a radical on a carbon atom.

Examples thereof include a polyvinylpyrrolidone (PVP), a polyacrylamide, a polyacrylamide of which a nitrogen atom is substituted with an alkyl group (e.g., an alkyl group having 1 to 10 carbon atoms, preferably 1 to 5 carbon atoms) (for example, a poly(N,N-diethylacrylamide), a poly(N,N-dimethylacrylamide), a poly(N-isopropylacrylamide), or the like), a poly(N-vinylacetamide), a poly(N-vinylformaldehyde), a poly(N-vinylisobutyramide), a polyamide epichlorohydrin, a poly(2-oxazoline), a poly(2-ethyl-2-oxazoline), a polyacrylic acid, a compound with a hydrophilic group (e.g., a hydroxyl ethyl group or the like) on an oxygen atom of polyacrylic acid (for example, HEMA or the like), a polymethacrylic acid, a polylysine, a polymaleic acid, alginic acid, chondroitin sulfate, pectin, hyaluronic acid, chitosan, colominic acid, pullulan, dextran, cellulose, a polyethylene glycol (PEG), a PEG-containing block copolymer (for example, a block copolymer of PEG and polyacrylic acid, a block copolymer of PEG and a polyamino acid such as a polylactic acid, or the like), a PEG-containing surfactant (such as PEG with a long chain alkyl group at one end), a polymer in which a PEG is modified at the end (for example, PEG having a methyl group, an ethyl group, a benzyl group, a dibenzylpropyl group, a dimethylaminoethyl group or the like at the end), a polyphosphorylcholine, a polytetrahydrofuran, a polyvinyl alcohol, a polymethyl vinyl ether, a polyethyleneimine (PEI), a polyallylamine, a polydiallylamine, a polymethyldiallylamine, a poly(N-vinylamine), a poly(vinyl-N-methylpyridinium salt), a polyvinyl phosphoric acid, a polyvinyl sulfonic acid, a polystyrene sulfonic acid, a polystyrene sulfonate salt, a poly(3-sulfopropyl potassium methacrylate), hydroxyethyl cellulose, hydroxypropyl methyl cellulose, a polydimethyldiallyl ammonium salt, a poly(vinyl methacrylic acid), a poly(2-vinylpyridine-N-oxide), a copolymer obtained by crosslinking two or more of these hydrophilic polymers (for example, an ethylene glycol-crosslinked polyacrylic acid polymer (for example, CLPAH-100)), and a hydrophilic (co)polymers with any of these hydrophilic polymers as a branched structure (for example, PEG derivatives in which at least one of these hydrophilic polymers is bonded to PEG as a branched structure).

However, radicals generated on the surface of the substrate are transferred to the hydrophilic polymer with different levels depending on the type of the hydrophilic polymer. In addition, radicals of the hydrophilic polymer generated by radical rearrangement have different reactivity with radicals of the alkyl group-containing polysiloxane compound depending on the type of the hydrophilic polymer. A compound with an atom having a non-covalent electron pair (e.g., oxygen, nitrogen) or a carbon capable of resonating with a double bond (usually, a carbon of alkyl and/or alkylene and/or a methine group) is more likely to radically react with Si-CₙH₂ₙ •. A compound with two atoms having a non-covalent electron pair (e.g., oxygen, nitrogen) or an atom capable of resonating with a double bond, or a compound with an atom having a non-covalent electron pair (e.g., oxygen, nitrogen) and a carbon capable of resonating with a double bond, also produces radical rearrangement even with Si-CₙH₂ₙ-O-O ·, and reacts with individual radicals (Si ·, Si-CₙH₂ₙ, Si-CₙH₂ₙ-O-O ·) on the substrate to recombine.

In order to produce radical rearrangement and recombination, a hydrophilic polymer also needs to approach a radical on the surface of the substrate, but in a case where the polymer has a rigid structure such as a case where the main chain of the polymer contains an aromatic ring, radical rearrangement and recombination may be difficult to produce. Therefore, a compound containing no aromatic ring in the main chain of the polymer is preferable. In addition, since the alkyl group-containing siloxane unit is negatively charged, an anionic polymer is difficult to approach the surface. Therefore, a compound containing no anionic group is preferable. However, this problem can be solved by suppressing charge repulsion by adjusting the pH and salt concentration of an aqueous solution of the polymer.

Therefore, the hydrophilic polymer, as used in the present invention, is preferably selected from these viewpoints, and preferable examples of the hydrophilic polymer include a polyvinylpyrrolidone (PVP), a polyacrylamide, a polyacrylamide of which a nitrogen atom is substituted with an alkyl group (e.g., an alkyl group having 1 to 10 carbon atoms, preferably 1 to 5 carbon atoms) (for example, a poly(N,N-diethylacrylamide), a poly(N,N-dimethylacrylamide), a poly(N-isopropylacrylamide), or the like), a poly(N-vinylacetamide), a poly(N-vinylformaldehyde), a poly(N-vinylisobutyramide), a polyamide epichlorohydrin, a poly(2-oxazoline), a poly(2-ethyl-2-oxazoline), a polyacrylic acid, a compound with a hydrophilic group (e.g., a hydroxyl ethyl group) on an oxygen atom of polyacrylic acid (for example, HEMA or the like), a polymethacrylic acid, a polylysine, a polymaleic acid, alginic acid, chondroitin sulfate, pectin, hyaluronic acid, chitosan, colominic acid, pullulan, dextran, cellulose, a polyethylene glycol (PEG), a PEG-containing block copolymer (for example, a block copolymer of PEG and polyacrylic acid, a block copolymer of PEG and a polyamino acid such as a polylactic acid, or the like), a PEG-containing surfactant (for example, PEG with a long chain alkyl group at one end), a polymers in which a PEG is modified at the end (for example, PEG having a methyl group, an ethyl group, a benzyl group, a dibenzylpropyl group, a dimethylaminoethyl group or the like at the end), a polyphosphorylcholine, a polytetrahydrofuran, a polyvinyl alcohol, a polymethyl vinyl ether, a polyethyleneimine (PEI), a polyallylamine, a polydiallylamine, a polymethyldiallylamine, a poly(N-vinylamine), a poly(vinyl-N-methylpyridinium salt), a polyvinyl phosphoric acid, a polyvinyl sulfonic acid, a polystyrene sulfonic acid, a polystyrene sulfonate salt, a poly(3-sulfopropyl potassium methacrylate), hydroxyethyl cellulose, hydroxypropyl methyl cellulose, a copolymer obtained by crosslinking two or more of these hydrophilic polymers, and a hydrophilic (co)polymer with any of these hydrophilic polymers as a branched structure (for example, a PEG derivative in which at least one of these hydrophilic polymers is bonded to PEG as a branched structure).

From the same points of view, a polyvinylpyrrolidone, a polyacrylic acid, an ethylene glycol-crosslinked polyacrylic acid polymer, a starch-grafted polyacrylic acid, PEG, a PEG-containing block copolymer, alginic acid, chondroitin sulfate, hyaluronic acid, pectin, hydroxyethyl cellulose, dextran, a polyvinyl alcohol, a polyethyleneimine, a polyglutamic acid, or a polyacrylamide is more preferred, and a polyvinylpyrrolidone, an ethylene glycol-crosslinked polyacrylic acid polymer, a polyacrylic acid, chondroitin sulfate, hydroxyethyl cellulose, a polyvinyl alcohol, a PEG-containing block copolymer, or PEG is particularly preferred.

Note that CLPAH-100 is a copolymer of PEG with vinyl groups at both ends and acrylic acids, and its molecular structure is as follows: 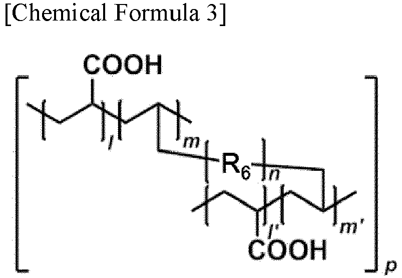 wherein R₆ represents a polyethylene glycol chain.

As a solvent for a hydrophilic polymer solution, an organic solvent containing a compound with a C-H bond cannot be used because radical rearrangement can occur from a SiCₙH₂ₙ · radical, and it is preferable to use water as the solvent. In addition, the Si · radical is relatively stable to water, but slowly forms a Si-OH group at a high temperature. On the other hand, in order to sufficiently generate a reaction between the hydrophilic polymer and the substrate, a certain amount of time and temperature are required. Therefore, immersion in the hydrophilic polymer solution is preferably performed at a temperature of 5 to 50°C for about 20 minutes to 3 hours, and more preferably performed at a temperature of 10 to 30°C for about 30 minutes to 1 hour. When the temperature is set to be low, the immersion time is preferably lengthened, and when the temperature is set to be high, the immersion time is preferably shortened.

The concentration of a hydrophilic polymer in a solution varies depending on the type of the hydrophilic polymer and the like, and may be usually 0.01 to 1% by mass, and is preferably 0.1 to 0.3% by mass in many cases. When an insoluble matter exists in the polymer solution, it is preferable to perform filtration, for example, with filter paper with a retained particle size of several microns.

The thickness of a hydrophilic polymer layer can be controlled in a range of about 1 nm to several um dependent on the type of the hydrophilic polymer. For example, a hydrophilic polymer layer with a thickness of 5 nm or less (usually 1 nm to 5 nm) is obtained by selecting a hydrophilic polymer with no crosslinked structure. Also, a hydrophilic polymer layer with a thickness of 6 nm to 5 um can be obtained by selecting a hydrophilic polymer with a crosslinked structure (for example, CLPAH-100, a crosslinked product of polyacrylic acid and starch, a crosslinked product of polyacrylic acid and polyamide epichlorohydrin, or the like). In this case, the thickness of the hydrophilic polymer layer can also be controlled by adjusting the crosslinking density. In the case of a hydrophilic polymer with a crosslinked structure, it is also possible to control the thickness of the hydrophilic polymer layer by applying ultrasonic to reduce the size of a crosslinked structure and using an aqueous solution filtered through a filter with an appropriate pore size.

The atmosphere after plasma treatment and before immersion in a hydrophilic polymer solution may be an inert gas atmosphere, but an oxygen-containing atmosphere is preferable. When the substrate is immersed in an atmosphere containing a certain level of oxygen, effective hydrophilization can be performed using Si-CₙH₂ₙ-O-O · radicals (e.g., Si-CH₂-O-O · radicals).

In this case, the oxygen concentration of the atmosphere is preferably 0.5 to 20% by mass, more preferably 0.7 to 15% by mass, and particularly preferably 0.8 to 10% by mass.

Depending on the immersion conditions, an additional heat treatment may be performed. If unreacted radicals remain, the heat treatment can make them involved in a reaction to generate bonds between the hydrophilic polymer and the substrate at higher levels. The additional heat treatment may be performed at a relatively high temperature, for example, at 80°C to 135°C for 20 minutes to 2 hours, and preferably at 80°C to 135°C for 30 minutes to 1 hour.

After the hydrophilization treatment, the obtained lens may be optionally heated and sterilized. According to the present invention, a substrate and a hydrophilic polymer form a stable covalent bond, which therefore allow sterilization treatment to be performed in an autoclave. Heat sterilization can be performed, for example, by placing a lens in water or a buffer solution (particularly a lens storage solution) and heating the lens usually at 121°C for 30 minutes under pressure. Depending on immersion conditions though, this sterilization treatment may also provide the same effect as the additional heat treatment described above, and heat sterilization is also beneficial in this respect.

### 4. Soft ocular lens

After the hydrophilization treatment or the heat treatment, a soft ocular lens of the present invention is obtained.

A lens obtained by performing the above-described plasma treatment and hydrophilization treatment comprises a contact lens substrate containing a (co)polymer with an alkyl group-containing polysiloxane structure, and a single coating layer containing a hydrophilic polymer on the surface of the substrate; and the lens has high hydrophilicity even if it only has a single coating layer.

The substrate is as described above, and in one embodiment, the substrate is made of a (co)polymer obtained by polymerizing a (macro)monomer composition containing a polymerizable siloxane in a ratio of 10% by mass or more, preferably 20% by mass or more, and still more preferably 30% by mass or more. A substrate with lots of polysiloxane structures has high oxygen permeability, and in a preferred embodiment, a lens has an oxygen permeability value (Dk) of 150 or more. On the other hand, as described above, alkyl group-containing siloxanes are localized on the surface of the substrate due to their water repellency and hydrophobicity and even with a relatively small content thereof many radicals can be formed on the surface of the substrate by plasma treatment.

The hydrophilic polymer is also as described above and is bonded to the alkyl group-containing polysiloxane structure of the substrate through radical recombination, and it plays a role of retaining moisture on the lens surface.

The hydrophilicity provided by a single coating layer can be confirmed by various parameters, and a single coating layer can be evaluated as providing a higher hydrophilicity if surface adsorbed water is confirmed by XPS analysis at a water vapor pressure of 5 mbar.

In addition, a lens according to one embodiment of the present invention has a coating layer surface with a water contact angle of 70° or less, a lens according to a preferred embodiment has a water contact angle of less than 60°, a lens according to a further preferred embodiment has a water contact angle of less than 50°, and a lens according to a still further preferred embodiment has a water contact angle of less than 40°. As used herein, the "water contact angle" means an angle obtained by calculating an angle between a water droplet and a lens surface by tangential method when water is dropped on the lens surface. Specifically, 1.5 µL of ion-exchanged water is dropped on the lens surface provided with the coating layer, the shape of the droplet is photographed from the side of the water droplet in the static state immediately after dropping, and a water contact angle is determined from the photographed shape of the droplet by tangential method.

Further, the lens of the present invention is characterized in having a coating layer with excellent rubbing resistance because the substrate and the hydrophilic polymer are linked by a large number of covalent bonds. Specifically, a lens according to one embodiment of the present invention has a water contact angle of less than 80°after a 20 times abrasion test, a lens according to a more preferred embodiment has a water contact angle of 70° or less after a 20 times abrasion test, a lens according to a further preferred embodiment has a water contact angle of 60° or less after a 20 times abrasion test, a lens according to a still further preferred embodiment has a water contact angle of 50° or less after a 20 times abrasion test, and a lens according to a particularly preferred embodiment has a water contact angle of 50° or less after a 200 times abrasion test.

As used herein, the "abrasion test " refers to a test of rubbing a sample in a state of being wetted with pure water a predetermined number of times (e.g., 20 times, 200 times) with wearing a nitrile rubber glove, washing the sample with pure water, wiping off the water adhering to the surface, then dropping purified water, and measuring the water contact angle by the tangential method as described above.

Of a lens of the present invention, the surface of the substrate can be sufficiently hydrophilized by a single coating layer, the thickness of the coating layer can be set to 1 nm to 5 nm. However, the thickness of the coating layer can be increased by adsorbing polymers with crosslinked structures, and the thickness of the coating layer in this case can be in the range of 6 nm to 5 µm.

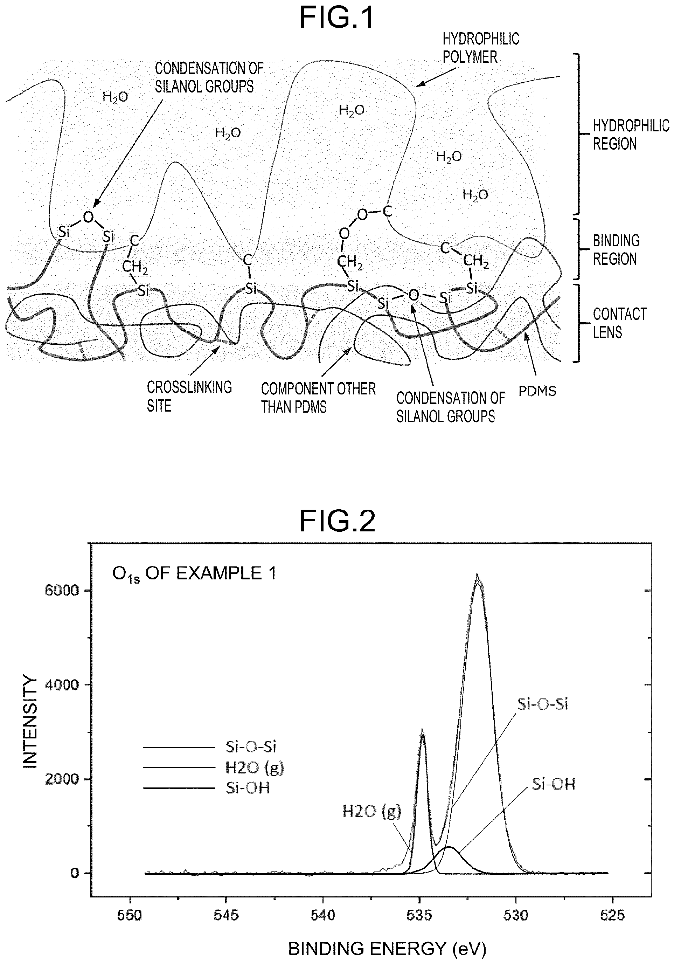

Here, reference is made to FIG. 1 setting forth a conceptual diagram of the structure of a lens according to the present invention. The lens substrate contains a (co)polymer with an alkyl group-containing polysiloxane structure, and the (co)polymer is obtained by polymerizing a polysiloxane compound with a polymerizable functional group and an alkyl group, or these and other polymerizable compounds. When such a lens substrate is subjected to plasma treatment, a Si · radical, a Si-CₙH₂ₙ · radical, and in the case of being exposed to the above-described oxygen-containing atmosphere, a Si-CₙH₂ₙ-O-O · radical are generated on the surface of the substrate, the Si-CₙH₂ₙ · radical and in some cases the Si-CₙH₂ₙ-O-O · radical are transferred to the hydrophilic polymer, and a portion having the alkyl group-containing polysiloxane structure is bonded to the hydrophilic polymer via bonds represented by the following formula (4) and in some cases bonds represented by the following formulas (5) and (6). 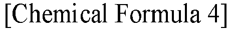 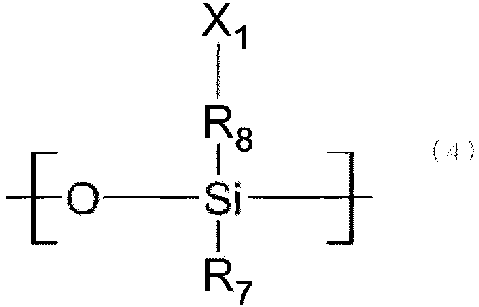 wherein R₇ represents an alkyl group, R₈ represents alkylene, and X₁ represents a carbon of the hydrophilic polymer. 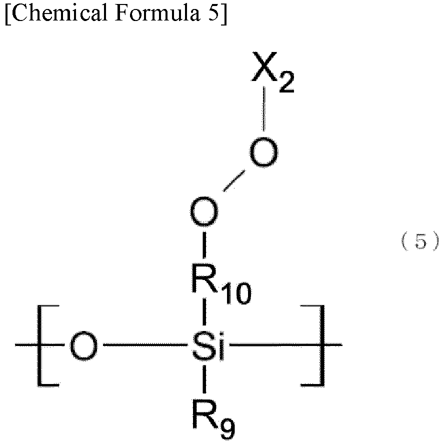 wherein R₉ represents an alkyl group, R₁₀ represents alkylene, and X₂ represents a carbon of the hydrophilic polymer. 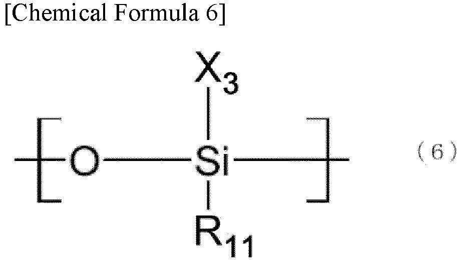 wherein R₁₁ represents an alkyl group, and X₃ represents a carbon of the hydrophilic polymer.

The bonding mode of the formula (5) is generated when the substrate is subjected to plasma treatment and then exposed to an oxygen-containing atmosphere for a short time or subjected to hydrophilization treatment in an oxygen-containing atmosphere, and when a water-soluble polymer that is relatively prone to form a radical (for example, a hydrophilic polymer with an atom having a non-covalent pair or a double bond) is selected; and an atom with a non-covalent pair or a carbon adjacent to a double bond in the hydrophilic polymer is bonded to oxygen of Si-alkylene-O-O of the substrate.

The bonding mode of the formula (6) is generated when a water-soluble polymer that is more prone to form a radical (for example, a hydrophilic polymer with two atoms having a non-covalent pair or a double bond, or with an atom having a non-covalent pair and a double bond, such as PVP) is selected; and a carbon adjacent to an atom having a non-covalent pair or a double bond in the hydrophilic polymer is bonded to Si of the substrate.

Further, a Si · radical formed in the vicinity of the surface of the lens substrate finally forms a Si-OH group (silanol group), and this silanol group undergoes dehydration condensation as set forth below.

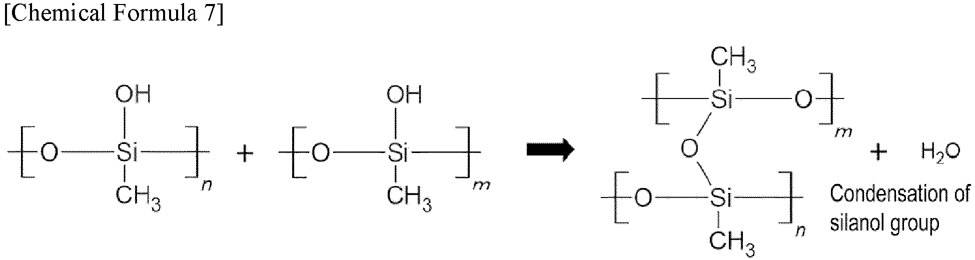

As a result, the (co)polymers with a polysiloxane structure are crosslinked via a siloxane bond (Si-O-Si), but when a hydrophilic polymer is present in the vicinity thereof during the condensation reaction, the hydrophilic polymer is entangled with the (co)polymers with crosslinked polysiloxane structures, and durability against rubbing is improved. Moreover, it is considered that the siloxane bond is also formed inside the contact lens, which is located under the bonding region, and that the condensation of the silanol groups inhibits diffusion of hydrophobic polymer to the surface.

In an example in which a substrate containing PDMS and, as a hydrophilic polymer, PVP are used, a Si · radical, a Si-CH₂ · radical, and in case of being exposed to the above-described oxygen-containing atmosphere a Si-CH₂-O-O · radical are generated on the surface of the substrate with plasma treatment, the Si-CH₂ · radical and in some cases the Si-CH₂-O-O · radical are transferred to PVP to generate the following radicals, and the covalent bonds set forth in the above formulas (4) and (6), or (4) to (6) are formed by recombining the radicals of the substrate and the PVP.

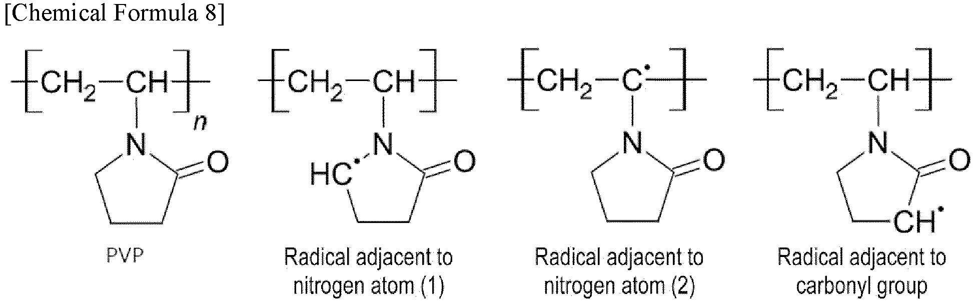

Even when polyethylene glycol (PEG) is used as a hydrophilic polymer, hydrogen is extracted from a methylene group adjacent to an oxygen atom through radical rearrangement to easily form a radical, thereby mainly forming covalent bonds represented by the above formulas (4) and (6), or (4) to (6). In PEG, all methylene groups are equivalent, and a radical rearranged to a methylene group can resonate with two oxygen atoms, whereby recombination with a Si · radical becomes easy.

A lens according to the present invention carries hydrophilic polymers on a substrate through a large number of covalent bonds and retains water on the lens surface by the hydrophilic polymers as described above. In a lens according to a preferred embodiment of the present invention, 5% or more of the alkyl group-containing siloxane units present on the surface of the substrate can be bonded to C of the hydrophilic polymers, and in a lens according to a more preferred embodiment, 10% or more of the alkyl group-containing siloxane units present on the surface of the substrate can be bonded to C of the hydrophilic polymers.

As described above, according to the present invention, hydrophilic polymers can be reliably coated onto a substrate with high strength and high efficiency by means of the mechanism of radical recombination. As a result, even when the oxygen permeability thereof is increased and the dry feeling during wearing is reduced by increasing the silicone content, the lens surface is sufficiently hydrophilized, so that the lens can be worn for a long period of time without discomfort. In addition, since the hydrophilic polymer is covalently bonded to the substrate by recombination of a large number of radicals, the coating layer has excellent scratch resistance, allowing the lens to be used repeatedly. Furthermore, since hydrophilization can be performed with one hydrophilic polymer layer, the production process is simplified, and productivity can be improved.

### EXAMPLES

Hereinafter, the present invention will be described more specifically by the following examples, but the present invention is not limited thereto. In the examples, "%" represents % by mass.

### 1. Evaluation of chemical changes and hydrophilization on the surface of a substrate consisting of PDMS rubber where the substrate is subjected to plasma treatment and coating with different compounds

This test demonstrates how the plasma of inert gas chemically changes a hydrocarbon group-containing polysiloxane surface and what characteristics this leads to. In addition, surface characteristics are compared when coated with three different compounds of PVP, PEG, and decane after plasma treatment.

### 1-1. Preparation of substrate

### [Synthesis Example 1]

In this test, a film-like PDMS rubber was used as a substrate. The PDMS rubber was prepared by crosslinking PDMS with vinyl groups at both ends (trade name: SYLGARD 184, Silicone Elastomer, manufactured by DOW, weight average molecular weight: 48,000) in the presence of a platinum catalyst using PDMS with a hydrosilyl group in the molecule (a crosslinking solution of SYLGARD 184, weight average molecular weight: 3,500) as a crosslinking agent. The PDMS with vinyl groups at both ends and the crosslinking agent were mixed at a mass ratio of 20: 1, vacuum degassed, then processed into a film having a thickness of 0.15 mm, and heated at 90°C for 1 hour to allow a crosslinking reaction to proceed. In this way, a PDMS rubber with the same strength as that of the soft ocular lens was prepared. This PMDS rubber was cut to an appropriate size and subjected to the plasma treatment and coating described below.

### 1-2. Plasma treatment and coating

### [Example 1]

The PDMS rubber was subjected to plasma treatment, and then immersed in a PVP aqueous solution to coat the surface of the sample. For the plasma treatment, a plasma generator was used in which two circular plate electrodes with a diameter of 10 cm were installed in parallel at an interval of 5 cm in a chamber (manufactured by SAKIGAKE-Semiconductor Co., Ltd., trade name: YHS-DC100). The sample was placed between the electrodes, after vacuum replacement in the chamber, a nitrogen gas was then introduced, and the sample was irradiated with plasma under a pressure of 20 Pa for 30 seconds. The flow rate of the nitrogen gas was 10 sccm, and the output was 50 W. After plasma irradiation, nitrogen gas was introduced to return the chamber to normal pressure, and the plasma-treated PDMS rubber was immersed in a PVP aqueous solution (0.2% by mass, weight average molecular weight of 40,000) under a nitrogen atmosphere and left for 30 minutes.

### [Example 2]

The PDMS rubber subjected to plasma treatment in the same manner as in Example 1 was immersed in a PEG aqueous solution (0.2% by mass, weight average molecular weight of 1,000) under a nitrogen atmosphere, and left for 30 minutes.

### [Reference Example 1]

The PDMS rubber subjected to plasma treatment in the same manner as in Example 1 was placed in decane under a nitrogen atmosphere and immersed for 30 minutes, unbound decane was removed from the PDMS rubber with ethanol, and the PDMS rubber was dried.

### 1-3. Characterization

### 1-3-1. Evaluation of hydrophilization by water contact angle

### (1) Test method

The samples obtained in Examples 1 and 2 and Reference Example 1 were measured for water contact angles with 1.5 µL of ion-exchanged water. As a control, the contact angle of the substrate before plasma treatment was also measured.

1.5 µL of ion-exchanged water was dropped on the lens surface provided with a coating layer, the shape of the droplet was photographed from the side of the water droplet in the static state immediately after dropping, and the water contact angle was determined from the photographed shape of the droplet by tangential method.

### (2) Test results

The measurement results of the water contact angle of each sample are summarized below.

**[Table 1]**

| | Example 1 | Example 2 | Reference Example 1 |
|---|---|---|---|
| Before plasma treatment | 117.4° | 117.4° | 117.4° |
| After coating | 43.3° | 55.8° | 101.5° |

| | | | |
|---|---|---|---|
| (Note) The contact angle of the sample of Reference Example 1 is larger as compared to those of the samples of Examples 1 and 2. The main cause is understood to be that decane is more hydrophobic than PVP and PEG. | | | |

From these experimental results, it is understood that when the PDMS rubber is treated with the plasma of an inert gas, the surface of the PDMS rubber is highly activated, and PVP, PEG, and decane are bonded thereto. The structure common to these adsorbed compounds is a C-H bond, and it is presumed that a radical capable of activating a C-H bond is generated from a -Si(CH₃)₂-O- group. The most probable radical is a Si-CH₂ · radical (NON PATENT LITERATURE 4), which is expected to undergo radical rearrangement between the radical and a C-H of the adsorbed compounds to generate radicals on carbon atoms of the adsorbed compounds, which recombine with Si-CH₂ · radicals and silicon radicals (Si ·) on the surface of the PDMS rubber.

### 1-3-2. Evaluation of hydrophilization level and bonding mode by XPS measurement

The samples obtained in Example 1, Example 2 and Reference Example 1, and the PDMS rubber substrates before and after plasma treatment were analyzed for adsorption of water molecules on the sample surfaces and the bonding modes between the substrates and the coating layers using a quasi-atmospheric pressure X-ray photoelectron spectroscopy (XPS) device (manufactured by Tokyo Instruments, Inc., EnviroESCA, monochromatic Al Kα X-ray (1486.6 eV, 42 W), pass energy (30 eV)). XPS measurements were performed within 2 days from sample preparation.

The vapor pressure of water is 25 mbar at room temperature, but first, the surface of each sample was subjected to XPS measurement at a water vapor pressure of 20 mbar. Adsorption of water was confirmed in all of (1) the substrate (PDMS rubber before plasma treatment), (2) the PDMS rubber after plasma treatment by the method described in Example 1, (3) the sample of Example 1 (the PDMS rubber to which PVP was adsorbed after plasma treatment), (4) the sample of Example 2 (the PDMS rubber to which PEG was adsorbed after plasma treatment), and (5) the sample of Reference Example 1 (the PDMS rubber to which decane was adsorbed after plasma treatment).

Next, the surface of each sample was subjected to XPS measurement under water vapor pressure of 20 mbar, 15 mbar, 10 mbar, 8 mbar, and 5 mbar. The sample of Reference Example 1 (the PDMS rubber to which decane was adsorbed after plasma treatment) was used as a model of a hydrophobic surface, and the sample of Example 2 (the PDMS rubber to which PEG was adsorbed after plasma treatment) was used as a model of a hydrophilic surface. As a result, it was found that both of the decane-modified PDMS rubber and the PEG-modified PDMS rubber exhibited adsorption of water up to 8 mbar but did not exhibit the adsorption at 5 mbar. This indicates that the adsorption of water up to 8 mbar is monomolecular adsorption (Langmuir adsorption) and that both the surface of the decane-modified PDMS rubber and the surface of the PEG-modified PDMS rubber have the same level of Lennard-Jones potential. On the other hand, the peak of water on the surface of the PEG-modified PDMS rubber was shifted from 534.6 eV (20 mbar) to 534.2 eV (8 mbar), and the peak area was also about 1/3. The shift of 0.4 eV is considered to be due to change in the charge-up state of the sample due to the decrease in adsorbed water.

On the other hand, adsorption of water molecules was confirmed in the sample of Example 1 even at 5 mbar (FIG. 2, Table 2). In addition, the peak of water molecules was very sharp, and its full width at half maximum was 0.63 eV This indicates that water molecules were adsorbed not in a condensed liquid but in a state close to gas. The PVP surface had a very large adsorption force to water molecules.

The above XPS results do not indicate that modification with PEG is unsuitable for hydrophilization of PDMS. The PEG-modified PDMS rubber exhibited a contact angle of 55.8° in the sample immediately after preparation, but the contact angle increased to 74.7° when exposed to air for 90 minutes and increased to 90.4° after 22 hours. This indicates that PEG on the surface is prone to move to be buried in the PDMS rubber, and conversely, PDMS is prone to come out on the surface. XPS measurements are performed during 24 to 48 hours after sample preparation, during which the PEG surface is likely to have become hydrophobic. That is, both the PEG modification and the PVP modification exhibited sufficient hydrophilicity immediately after preparation, but when left in air the former tended to become hydrophobic while the latter did not. However, even in the former case (Example 2), the hydrophilicity can be maintained for a long period of time as long as it is stored in water.

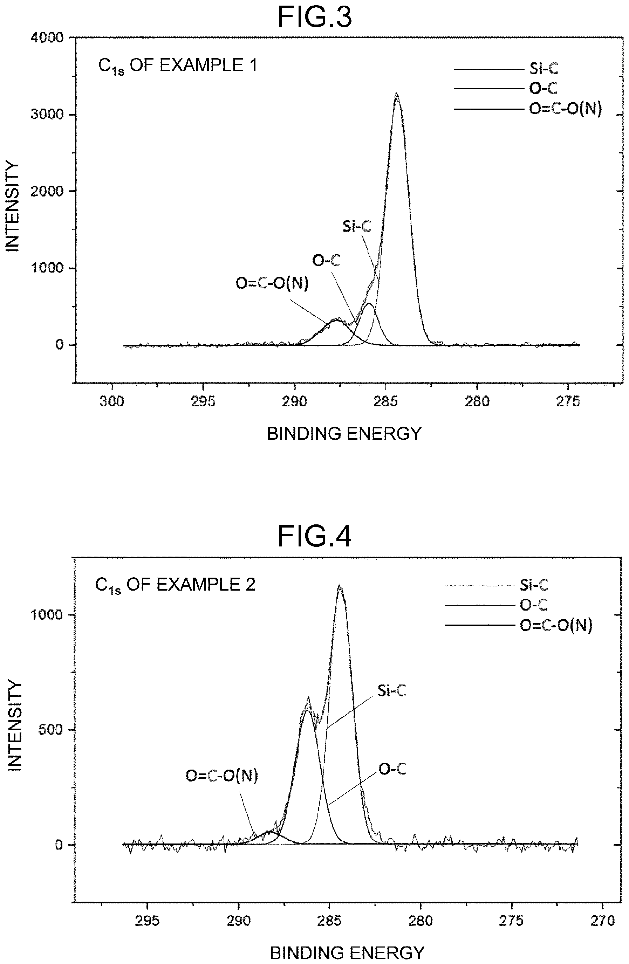

In a XPS measurement under a water vapor pressure of 5 mbar, the presence of a carbonyl carbon in the O=C-N bond of the side chain of PVP was confirmed at 287.76 eV in the C1s region in the sample of Example 1 (the PDMS rubber to which PVP was adsorbed after plasma treatment). This event is shown in FIG. 3. Assuming that all the carbonyl carbons are derived from PVP, it was determined from the detection amount (10.1%) of the carbonyl carbon that a PVP layer having a thickness of about 2.0 nm was formed. However, in practice, all the radicals transferred to the PVP may not recombine with the PDMS, and a part thereof may be oxidized. In addition, radicals on the methyl group of PDMS may be also oxidized. Therefore, the actual thickness of the PVP layer was considered to be about 1 nm.

On the other hand, in the sample of Example 2 (the PDMS rubber to which PEG was adsorbed after plasma treatment), the presence of ether carbon of the -(CH₂-CH₂-O)- unit of the main chain was confirmed at 286.22 eV This event is shown in FIG. 4. It was determined from the detection amount (35.5%) of the ether carbon that a PEG layer having a thickness of about 1.5 nm was formed. In the case of PEG, since all carbon atoms are bonded to oxygen, the ratio of carbon bonded to oxygen was very large in the C₁ₛ region.

Table 2 summarizes the results of XPS measurement in the Cis region and the Ois region of each sample.

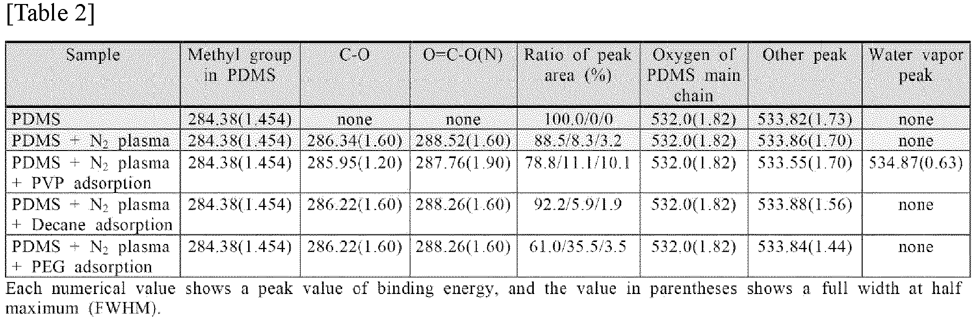

In the substrate (the PDMS rubber before plasma treatment), only methyl carbons bonded to silicon were observed at 284.38 eV, but carbon atoms bonded to oxygen and carbon atoms of O=C-O(N) could be confirmed after plasma treatment. Comparison of the data before and after plasma treatment shows that 11.5% of the methyl carbons were radicalized by the plasma.

Interestingly, when comparing the data before and after immersion in decane, the ratio of carbon atoms bonded to oxygen or more oxidized carbon atoms decreased to 7.8%. This indicates that radicals on the methyl groups of PDMS were reduced by radical rearrangement, and oxidation was prevented.

What is notable in Table 2 is that in the plasma-treated PDMS rubber, C bonded to one O atom was 8.3%, C bonded to two O atoms was 3.2%, and the remaining 88.5% of C was not oxidized. That is, since the plasma treatment was performed under the same conditions in Examples 1 and 2, it is considered that 11.5% of the methyl groups formed Si-CH₂ · radicals and the remaining methyl groups (88.5%) did not generate Si-CH₂ · radicals immediately after plasma treatment also in the samples of these Examples. The plasma treatment conditions of the present invention were considered very mild.

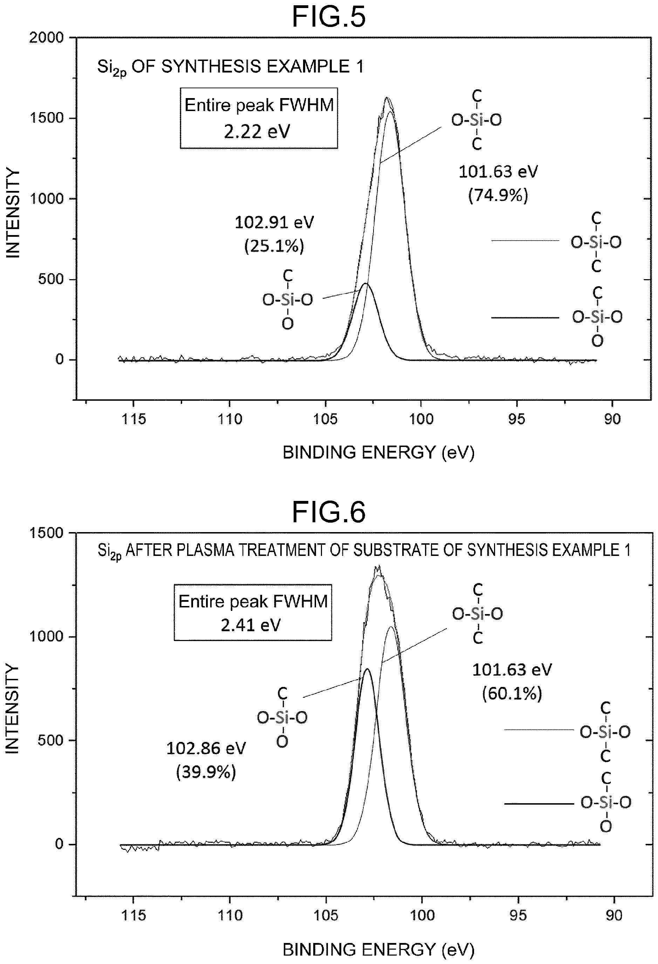

Table 3 summarizes the results of XPS measurement in the N₁ₛ region and the Si₂ₚ region of each sample. Also, FIGS. 5, 6, 7, and 8 show spectra in the Si₂ₚ regions obtained by performing XPS analysis on the sample of Synthesis Example 1 (the PDMS rubber), the sample obtained by subjecting the substrate of Synthesis Example 1 to plasma treatment, the sample of Example 1, and the sample of Reference Example 1, respectively.

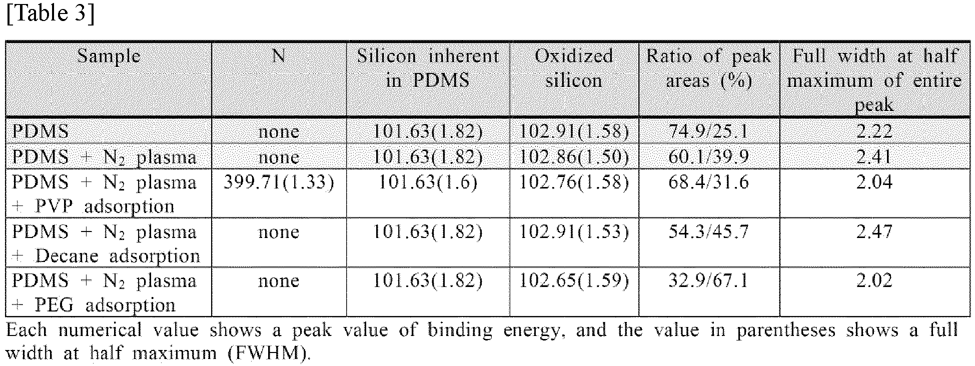

In this XPS measurement, the charge-up of Si and O in the main chain of PDMS is slightly different from the charge-up of N and C because the oxidation state of Si changes. Therefore, in Tables 2 and 3, the charge-up values of C and N were determined with reference to C of the methyl group of PDMS, and the charge-up values of O and Si are determined with reference to O in the main chain of PDMS. In the latter case, the charge-up correction is somewhat less accurate for the PEG-adsorbed sample because it contains 39% oxygen that is not derived from the main chain of PDMS (see Table 2).

In the N₁ₛ region, the presence of nitrogen was confirmed at 399.71 eV only in the sample of Example 1 (the PDMS rubber to which PVP was absorbed after plasma treatment). The peak area of nitrogen was 450.5, and the peak area of Si derived from PDMS was 2225. Considering the photoionization cross section ratio of nitrogen to silicon (1.8: 0.817), the ratio of detected Si to N was 1: 0.092. As a result, the thickness of the PVP was considered to be about 1 nm.

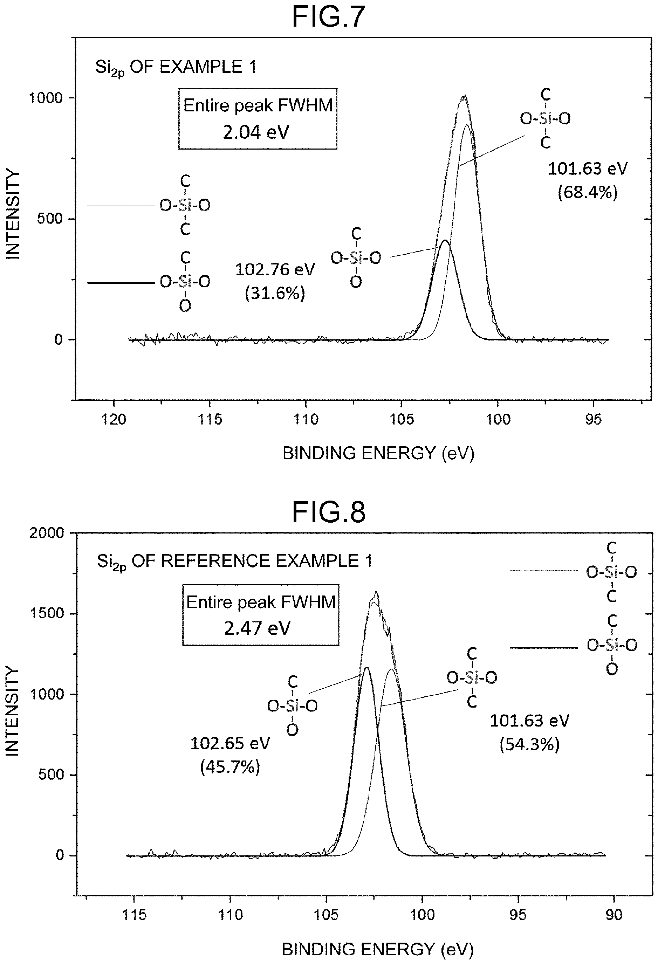

In the measurement in the Si₂ₚ region of the PDMS rubber before plasma treatment, in the peak fitting, the peak of Si bonded to two methyl groups and two oxygen atoms of PDMS appeared at 101.63 eV with a full width at half maximum of 1.82 eV, the ratio thereof was 74.9%, and the remaining 25.1% could be assigned as more oxidized Si (FIG. 5). The latter was considered to be Si bonded to three O atoms, and a part of the PDMS chain was considered to have a branched structure via oxygen. On the other hand, in the PDMS rubber after plasma treatment, the peak of more oxidized Si (considered as Si bonded to three O atoms) increased by 14.8%. This result was due to the fact that 14% or more of Si-CH₃ bonds of PDMS were cleaved and turned to Si-OH bonds or the like (FIG. 6). On the other hand, as shown in FIG. 7, in the sample of Example 1 (the PDMS rubber to which PVP was absorbed after plasma treatment), Si bonded to three O atoms was increased by only 6.5% as compared with the substrate. This difference (8.3%) is understood to be due to the suppression of oxidation in the sample in Example 1 by the recombination of PVP with silicon radicals (Si ·). On the other hand, in the sample of Reference Example 1 (the PDMS rubber to which decane was adsorbed after plasma treatment), it is understood that the oxidation of Si proceeded more, and less recombination with silicon radicals (Si ·) occurred (FIG. 8). The sample of Example 2 (the PDMS rubber to which PEG was adsorbed after plasma treatment) was also analyzed by the same method, but the discussion is omitted since the accuracy of the charge-up correction was low only for this sample.

On the other hand, Table 3 shows a full width at half maximum of the entire peak in the Si₂ₚ. In the PDMS rubber before plasma treatment, this value was 2.22 eV (FIG. 5), but this value increased to 2.41 eV by plasma treatment. That is, as the oxidation of Si proceeds, the peak becomes wider. However, in the sample to which PVP was absorbed, conversely, the value was 2.04 eV, and the peak was sharp (FIG. 7). On the other hand, when decane was adsorbed, the value was 2.47 eV, which is substantially equal to the value after plasma treatment. This supports that the decane was not combined with silicon radicals (Si ·). A full width at half maximum when PEG was adsorbed was almost the same as that when PVP was adsorbed, and from this result, it is considered that PEG was combined with silicon radicals (Si ·).

As described above, the adsorption of hydrophilic polymers by a method of the present invention is characterized in that a full width at half maximum of Si in XPS measurement is small.

Another feature to be noted in Table 3 is that Si bonded to two O atoms was observed at 101.63 eV in all the samples. When plasma irradiation conditions are severe and many Si-C bonds of -Si(CH₃)₂-O- groups of PDMS are dissociated, a Si atom of PDMS is further oxidized to bond with three or four oxygen atoms. However, in Table 3, 60% or more of Si atoms are bonded to a methyl group after plasma treatment of PDMS. In the sample of Example 1 to which PVP was subsequently absorbed, 68% or more of Si atoms are bonded to two O atoms (FIG. 7), and even when decane was adsorbed, 50% or more of Si atoms are bonded to two O atoms (FIG. 8).

### 2. Evaluation of a substrate obtained by polymerizing a composition containing PDMS with polymerizable group and other (macro)monomers for surface hydrophilicity where the substrate is subjected to plasma treatment and hydrophilization with hydrophilic polymers

In this test, a substrate obtained by polymerizing a composition containing PDMS with a polymerizable group, another macromonomer and a monomer was subjected to plasma treatment and hydrophilization treatment in an inert gas, and the surface characteristics of the obtained sample were evaluated.

### 2-1. Preparation of substrate

### [Synthesis Example 2]

28 Parts by mass of polydimethylsiloxane with methacryloyl groups at both ends, 7 parts by mass of polydimethylsiloxane with methacryloyl groups at one end, 57.9 parts by mass of trifluoromethyl acrylate, 7 parts by mass of 2-ethylhexyl acrylate, 0.1 parts by mass of dimethylaminoethyl acrylate, 0.5 parts by mass of an ultraviolet absorber (RUVA-93), 0.01 parts by mass of a colorant (RB246), 0.5 parts by mass of a polymerization initiator (IRGACURE 819), and 10 parts by mass of t-amyl alcohol were mixed, and the mixed solution was filtered through a filter and injected between two polypropylene molds, and polymerized by irradiation with ultraviolet rays. After the polymerization, the molds were separated, and the resulting product was immersed in isopropyl alcohol at 60°C for 2 hours to remove unreacted monomers, washed again with isopropyl alcohol, and then air-dried at room temperature to obtain a substrate.

### 2-2. Preparation of lens sample

### [Example 3]

The substrate was subjected to plasma treatment, and then immersed in a PVP aqueous solution to coat the surface of the substrate. For the plasma treatment, a plasma generator was used in which two circular plate electrodes with a diameter of 20 cm were installed in parallel at an interval of 5 cm in a chamber. The substrate was placed between the electrodes, after vacuum replacement in the chamber, a nitrogen gas was then introduced, and the substrate was irradiated with plasma under a pressure of 19 Pa for 30 seconds. The flow rate of the nitrogen gas was 10 sccm, and the output was 50 W. After plasma irradiation, nitrogen gas was introduced to return the chamber to normal pressure, and the substrate subjected to plasma treatment was immersed in a PVP aqueous solution (0.2% by mass, weight average molecular weight of 1,300,000) under a nitrogen atmosphere and left for 30 minutes. Thereafter, the PVP aqueous solution containing the substrate was transferred to a vial in the air, subjected to a heat treatment (sterilization treatment) at 121°C for 1 hour, then further subjected to a sterilization treatment at 121°C for 30 minutes in a contact lens storage solution (manufactured by SEED Co., Ltd., Softcare pure), sufficiently rinsed with water, and subjected to a test after water adhering to the surface is removed.

### 2-3. Characterization

### 2-3-1. Evaluation of hydrophilization by water contact angle

For the sample obtained in Example 3, a contact angle was measured according to the procedure described in 1-3-1. The sample obtained in Example 3 exhibited superhydrophilicity, and the contact angle could not be measured.

### 2-3-2. Abrasion test

The sample obtained in Example 3 in a state of being wetted with pure water was rubbed 20 times with a nitrile rubber glove and washed with pure water, then the water adhering to the surface was wiped off, and a contact angle was measured according to the procedure described in 1-3-1. The contact angle of the sample obtained in Example 3 after the abrasion test was 50.1°.

### 2-3-3. Evaluation of surface characteristics by XPS analysis

For the sample obtained in Example 3 and the substrates before and after plasma treatment, adsorption of water molecules on the surface and the bonding modes between the substrates and the coating layers were analyzed using a quasi-atmospheric pressure X-ray photoelectron spectroscopy (XPS) device (manufactured by Tokyo Instruments, Inc., EnviroESCA, monochromatic Al Kα X-ray (1486.6 eV, 42 W), pass energy (30 eV)). The substrate after plasma treatment was measured one week after plasma treatment.

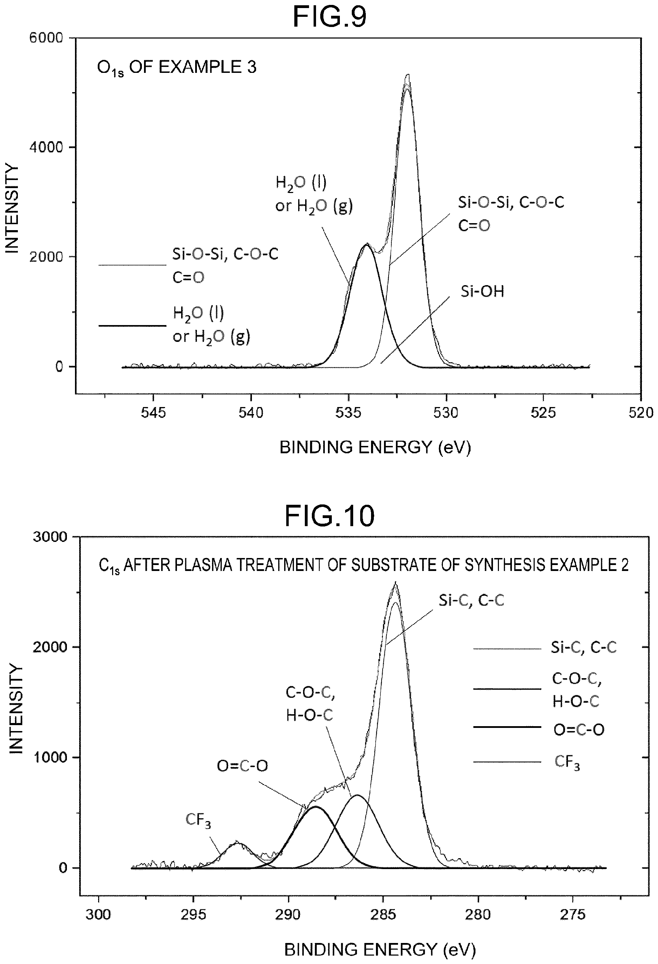

In the sample obtained in Example 3, a remarkable water peak was confirmed in the Ois region by XPS measurement under a water vapor pressure of 5 mbar. The results are shown in FIG. 9. Water peaks are considered to include both gaseous and liquid states. In addition, oxygen of Si-OH was present between oxygen of a Si-O-Si bond and oxygen of water, but since the peak of water was broad, it was not distinct as a peak.

On the other hand, in the substrates before and after plasma treatment, no peak of water was confirmed, and it was confirmed that the surface was hydrophobic. The substrate subjected to plasma treatment exhibited high hydrophilicity (water contact angle: 19.4°) immediately after plasma irradiation but became hydrophobicity (water contact angle: 80° or more) the next day, and therefore it is considered that the adsorption of water was small. This could be due to the diffusion of hydrophobic PDMS from the inside to the surface.

When full widths at half maximum (FWHM value) of the Si entire peak before curve fitting in the Si₂ₚ region were compared between pre- and post-plasma treatments in XPS measurement under a water vapor pressure of 5 mbar, that of the substrate before plasma treatment was 1.79 eV, whereas that of the substrate after plasma treatment spread to 2.13 eV This indicates that Si of PDMS was oxidized, as having been demonstrated in the similar test conducted on the substrate consisting of PDMS rubber. On the other hand, in the sample obtained in Example 3, the full width at half maximum is reduced to 1.63 eV As also having been demonstrated in the similar test conducted on the substrate consisting of PDMS rubber, this is considered to be due to the suppression of oxidation of silicon radicals (Si ·) by the binding of PVP.

In a XPS measurement at a water vapor pressure of 5 mbar, peaks derived from a CF₃ group and an O=C-O bond were confirmed in the substrates before and after plasma treatment in the C₁ₛ region. The XPS spectra of the substrate after plasma treatment (without adsorbing PVP) are set forth in FIG. 10. The substrate was produced by polymerizing a mixture containing 57.9 parts by mass of trifluoromethyl acrylate and 28 parts by mass of polydimethylsiloxane with methacryloyl groups at both ends, and it is understood that the substrate was derived from these components. After the plasma treatment, photoelectrons from H-O-C bonds were increased in addition to C-O-C bonds, and it is understood that the photoelectrons were generated by oxidation of the radicals on methyl groups of PDMS.

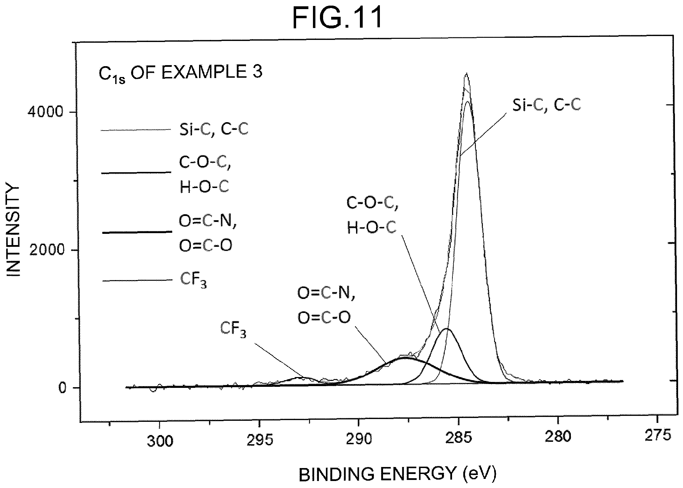

On the other hand, in the XPS spectra in the Cis region of the sample obtained in Example 3, as set forth in FIG. 11, peaks derived from CF₃ groups and O=C-O became extremely weak, and oxidation of the radicals (Si-CH₂ ·) on methyl groups of PDMS was suppressed, so that a shoulder derived from H-O-C bonds also became small. However, due to the mixture of ester bonds and amide bonds, peaks derived from O=C-N and O=C-O are broadened.

Interestingly, the spectra in FIG. 11 are very similar to the spectra of the sample in which PVP was adsorbed to the PDMS rubber in FIG. 3, except for the weak CF₃ and broadened O=C-O(N) peaks. It is presumed that the binding of PVP to PDMS increased the concentration of PDMS in the vicinity of the surface, and that the portions derived from trifluoromethyl acrylate is relatively submerged. In other words, it is understood that the PDMS in the substrate was hydrophilized by the binding of PVP to the PDMS as in the substrate made of PDMS rubber.

The ratio of nitrogen to carbon present on the surface was calculated from the XPS spectra of the substrate after plasma treatment and the sample obtained in Example 3, so that it was found that 3.03 nitrogen atoms were present with respect to 100 carbon atoms in the sample obtained in Example 3. In the substrate after plasma treatment, X-ray photoelectrons were not emitted around 400 eV, and thus it is clear that PVP was bonded to the substrate in the sample obtained in Example 3. From both XPS spectra, the thickness of the PVP layer of the sample obtained in Example 3 was considered to be about 1 nm.

### 3. Analysis of state of substrate surface after plasma treatment

In this test, a modified state of a substrate surface was analyzed at the stage where a prepared substrate was subjected to plasma treatment.

### [Reference Example 2]

### 3-1. Test Method

Substrate prepared according to [Synthesis Example 2] were subjected to plasma treatment according to the procedure described in [Example 3], and water contact angles of the surfaces of the substrates before and after plasma treatment were measured according to the procedure described in 1-3-1.

### 3-2. Test results

A water contact angle of the surface of the substrate before plasma irradiation was measured and found to be 111°. This value is close to the contact angle (117.4°, see Table 1) of the PDMS rubber and is almost equal to the contact angles of untreated PDMS reported in some papers and the like. The substrate prepared in [Synthesis Example 2] had such a water contact angle even though it was prepared by polymerizing a composition containing various macromonomers and monomers in addition to polydimethylsiloxane with a methacryloyl group. From this, it can be understood that the surface of the substrate was almost covered with PDMS. This is because the surface tension of PDMS is 20 to 22 mN/m, which is significantly smaller than that of other hydrocarbon-based polymers, and therefore the surface covered with PDMS is more thermodynamically stable.

The substrates prepared in [Synthesis Example 2] were subjected to plasma irradiation, and water contact angles of the surfaces of the substrates were measured immediately thereafter and found to decrease to an average of 40.7° (n = 9). However, the water contact angles were measured several days later and found to be around 90°, and after 14 days, the water contact angles increased to an average of 109.4° (n = 9). That is, the water contact angles returned to almost the initial value in two weeks.

Such fluctuations in the water contact angles indicate that the surfaces of the substrates prepared in [Synthesis Example 2] were covered with PDMS, this was activated (radical formation) by plasma and then deactivated (radicals stabilized) by exposure to the atmosphere, and the internal PDMS moves to the surface and returns to its original surface state. The same reason can explain the large water contact angle after plasma treatment confirmed in Reference Example 1.

### 4. Influence of difference in oxygen content in atmosphere on surface hydrophilization during hydrophilization treatment with hydrophilic polymer solution

In this test, whether the oxygen content in the atmosphere during the hydrophilization treatment was varied to affect hydrophilization was studied.

### [Examples 4 to 6]

### 4-1. Preparation of lens sample

After plasma treatment, the substrate was subjected to plasma treatment and hydrophilization treatment in the same manner as in Example 3 except that the substrate was held in a nitrogen atmosphere having an oxygen concentration of 0.5% by mass, 1.0% by mass, or 18.4% by mass for 3 seconds and then immersed in a PVP aqueous solution (0.2% by mass, weight average molecular weight of 40,000) under a nitrogen atmosphere.

### 4-2. Abrasion test

An abrasion test was conducted on the samples obtained in Examples 4 to 6 according to the procedure described in 2-3-2. The contact angle after rubbing treatment was 45.1° for the sample of Example 4 in which the substrate was exposed to an atmosphere with an oxygen concentration of 0.5% by mass for a short time after plasma treatment, 32.3° for the sample of Example 5 in which the substrate was exposed to an atmosphere with an oxygen concentration of 1.0% by mass, and 34.4° for the sample of Example 6 in which the substrate was exposed to an atmosphere with an oxygen concentration of 18.4% by mass. It has been demonstrated that exposure to an oxygen-containing atmosphere for a short time after plasma treatment allows more hydrophilic polymers to be firmly bonded to the substrate. In particular, when exposed to an atmosphere with an oxygen concentration of about 1.0%, the most hydrophilic polymers could be firmly bonded. This also indicates that use of Si-C-O-O · radicals is effective in more efficiently bonding the hydrophilic polymer to the substrate.

### 5. Influence of difference in molecular weight of hydrophilic polymer on hydrophilization

In this test, the same kind of hydrophilic polymers with different molecular weights were used to hydrophilize a substrate containing an alkyl group-containing siloxane, and whether difference in molecular weights of the hydrophilic polymers affected the hydrophilization was examined.

### [Examples 7 and 8]

### 5-1. Preparation of lens sample

A lens sample was prepared under the same conditions and procedures as in Example 3 except that the plasma-treated substrates were immersed in an aqueous solution (0.2% by mass) of PVP with a weight average molecular weight of 350,000 or 40,000.

### 5-2. Evaluation by abrasion test

An abrasion test was conducted on the samples obtained in Examples 7 and 8 according to the procedure described in 2-3-2. The contact angles after rubbing treatment were 51.5° for the sample of Example 7 (weight average molecular weight: 350,000) and 49.8° for the sample of Example 8 (weight average molecular weight: 40,000). The sample of Example 3 (weight average molecular weight: 1,300,000) had a contact angle of 50.1°, and difference in molecular weights of PVP had no effect on contact angles after rubbing treatment.

### 6, Surface hydrophilization with different hydrophilic polymers

In this test, the surface of a substrate was hydrophilized with different hydrophilic polymers to evaluate hydrophilicity.

### 6-1. Preparation of lens sample

### [Example 9]

The substrate was subjected to plasma treatment, and then immersed in an aqueous solution of polyacrylic acid to coat the surface of the substrate.

After plasma treatment was conducted according to the conditions and procedures described in [Example 3], the sample was held in a nitrogen atmosphere with an oxygen concentration of 18.06% by mass for 3 seconds, then immersed in an aqueous solution of polyacrylic acid (0.2% by mass, weight average molecular weight of 240,000) under a nitrogen atmosphere, and left for 30 minutes. Thereafter, the aqueous solution of polyacrylic acid containing the substrate was transferred to a vial in the air and subjected to heat treatment (sterilization treatment) at 121°C for 30 minutes. The treated substrate was placed in deionized water, and further subjected to heat treatment at 121°C for 30 minutes. After heat treatment, the sample was sufficiently rinsed with water, and the water adhering to the surface was wiped off and sufficiently dried.

Incidentally, it has been confirmed by comparative experiments that the sterilization treatment with deionized water has the same effect as the sterilization treatment with a contact lens storage solution, and there is no significant difference in the contact angle values after abrasion test. However, Sterilization with deionized water may cause stinging to the eyes when wearing, and sterilization with a preservation solution for contact lenses is preferred when evaluating wearing performance.

### [Example 10]

The substrate was subjected to plasma treatment, and then immersed in an aqueous solution of chondroitin sulfate to coat the surface of the substrate.

Plasma treatment and hydrophilization treatment were conducted in the same manner as in [Example 3] except that after plasma treatment, nitrogen gas was introduced to return the chamber to normal pressure, and the substrate subjected to plasma treatment under a nitrogen atmosphere was immersed in an aqueous solution of chondroitin sulfate (0.1% by mass) and left for 30 minutes.

In this example, chondroitin sulfate was soluble in water, and in order to evaluate the durability of bonding to a contact lens, a sterilization treatment was conducted with deionized water for 1 hour. The guidelines for methods of sterilizing medical devices (ISO/TS 17665-2) sets the sterilization temperature for autoclave treatment to a retention time of 15 minutes or more at 121°C, but herein, a longer treatment time is set in order to confirm deterioration of the surface due to heat treatment.

### [Example 11]

The substrate was subjected to plasma treatment, and then immersed in an aqueous hydroxyethyl cellulose solution to coat the surface of the substrate.

Plasma treatment and hydrophilization treatment were conducted in the same manner as in [Example 3] except that after plasma treatment, nitrogen gas was introduced to return the chamber to normal pressure, and the substrate subjected to plasma treatment under a nitrogen atmosphere was immersed in an aqueous hydroxyethyl cellulose solution (0.1% by mass) and left for 30 minutes.

### [Example 12]

The substrate was subjected to plasma treatment, and then immersed in an aqueous solution of an ethylene glycol-crosslinked polymer of polyacrylic acid to coat the surface of the substrate.

Plasma treatment and hydrophilization treatment were conducted in the same manner as in [Example 3] except that after plasma treatment, nitrogen gas was introduced to return the chamber to normal pressure, and the substrate subjected to plasma treatment under a nitrogen atmosphere was immersed in an aqueous solution (0.2% by mass) of an ethylene glycol-crosslinked polymer of polyacrylic acid (trade name: CLPAH-100, manufactured by Fujifilm Corporation) and left for 30 minutes.

### 6-2. Characterization (water contact angle and abrasion test)

Measurement of water contact angles and an abrasion test were conducted on the samples obtained in Examples 9 to 12 according to the procedures described in 1-3-1 and 2-3-2. Water contact angles before and after rubbing of each sample are summarized below together with those of the sample of Example 3.

**[Table 4]**

| Example | Hydrophilic polymer | Water contact angle (°) | Water contact angle after rubbing (°) |
|---|---|---|---|
| 3 | PVP | Unmeasurable | 50.1° |
| 9 | Polyacrylic acid | 34.2° | 59.7° |
| 10 | Chondroitin sulfate | 39.5 ° | 58.2° |
| 11 | Hydroxyethyl cellulose | 28.8° | 51.0° |
| 12 | CLPAH-100 | Unmeasurable | 44.1° |

| | | | |
|---|---|---|---|
| Unmeasurable: The contact angle could not be measured due to superhydrophilicity (5°or less). | | | |

As set forth in Table 4, the contact lens modified with PVP and CLPAH-100 gave a super hydrophilic surface, and also had a small water contact angle after abrasion test. Even polyacrylic acid, hydroxyethyl cellulose, and chondroitin sulfate gave small contact angles after abrasion test, and it has been found that the performance similar to that of PVP or CLPAH-100 could be obtained by optimizing the experimental conditions.

In a comparison of transparency of the contact lens after drying, that modified with PVP was most excellent. This is probably because PVP is an amorphous polymer and retains its own transparency even when dried. On the other hand, when polyacrylic acid was adsorbed to a contact lens and dried, the surface thereof tended to be slightly cloudy. Therefore, it is necessary to adjust adsorption conditions such as pH. In the case of hydroxyethyl cellulose, dispersibility of the polymer might be poor, and it is better to select a grade with high dispersibility and low ash content. Although not shown in Table 4, hyaluronic acid and alginic acid also allowed hydrophilization similarly to chondroitin sulfate. However, these also tended to be slightly cloudy when dried.

### 6-3. Characterization (surface characterization by XPS analysis and abrasion test)

The sample obtained in Example 12 was wetted with pure water and rubbed 20 times with a nitrile rubber glove, washed with pure water, and the water adhering to the surface was wiped off. For the sample and the substrates before and after plasma treatment, the bonding modes between the substrates and the coating layer were analyzed by single crystal spectroscopy Al Kα rays using an X-ray photoelectron spectroscopy (XPS) device (K-Alpha⁺ manufactured by Thermo Fisher Scientific) under high vacuum. The spot diameter of the X-ray was set to 400

The ratio of C: O: N: F: Si was 52.8: 24.2: 0.2: 3.7: 19.3 in the substrate before plasma treatment, but was 61.5: 21.9: 2.4: 0.9: 13.4 in the substrate after plasma treatment. After plasma treatment, nitrogen atoms were slightly introduced into the substrate, with a presence ratio of 2.4%. Plasma treatment decreased the number of fluorine atoms from the surface of the substrate and increased the number of carbon atoms on the surface of the substrate. This is presumably because a part of the crosslinked structure of the substrate was decomposed by the plasma treatment, resulting in PDMS becoming unevenly distributed on the surface and on the contrary trifluoromethyl acrylate sinking.

In the sample obtained in Example 12 (the substrate immersed in an aqueous solution of CLPAH-100), the ratio of C: O: N: F: Si was 58.8: 27.1: 0.3: 0.5: 13.3. Increase in the presence ratio of oxygen is due to the high oxygen content of CLPAH-100. In addition, in the Cis region, the component at 286.4 eV derived from a C-O bond was 6.7% in the substrate after plasma treatment, whereas it was 20.8% and significantly increased in the sample obtained in Example 12. In the sample obtained by rubbing the sample obtained in Example 12 with a rubber glove, the component at 286.4 eV was reduced to 8.4%, but was considerably higher than the substrate after plasma treatment, and it can be seen that a large amount of hydrophilic polymer remained.

The surface of the contact lens before abrasion test exhibited superhydrophilicity. That is, a water droplet spread quickly, and a contact angle could not be measured. The contact lens after abrasion test showed a contact angle of 51.6° even after being left in the atmosphere for 7 days. This shows that the surface was covered with hydrophilic polymers.

### 7. Influence of difference in (macro)monomer composition for preparing substrate on hydrophilization

In this test, different (macro)monomer compositions for preparing a substrate were used to investigate influence on hydrophilization of a substrate.

### 7-1. Preparation of substrate

### [Synthesis Example 3]

A substrate was obtained under the same conditions and procedures as in Synthesis Example 2 except that the amount of trifluoromethyl acrylate was changed to 38.6 parts by mass and the amount of 2-ethylhexyl acrylate was increased by that decrease.

### [Synthesis Example 4]

A substrate was obtained under the same conditions and procedures as in Synthesis Example 2 except that the amount of trifluoromethyl acrylate was changed to 19.3 parts by mass and the amount of 2-ethylhexyl acrylate was increased by that decrease.

### 7-2. Plasma treatment and coating

### [Examples 13 and 14]

Plasma treatment and hydrophilization treatment were conducted according to the conditions and procedures described in [Example 12] except that the substrates of Synthesis Examples 3 and 4 were used.

### 7-3. Characterization (contact angle and abrasion test)

Measurement of contact angles and an abrasion test were conducted on the substrate before plasma treatment and the samples obtained in Examples 13 and 14 according to the procedures described in 1-3-1 and 2-3-2.

The results are summarized below.

**[Table 5]**

| Example | Water contact angle before plasma treatment | Water contact angle before rubbing treatment | Water contact angle after rubbing treatment |
|---|---|---|---|
| 12 | 111° | Unmeasurable | 44.1° |
| 13 | 110° | Unmeasurable | 74.8° |
| 14 | 110° | Unmeasurable | 79.5° |

| | | | |
|---|---|---|---|
| Unmeasurable: The water contact angle could not be measured due to superhydrophilicity. | | | |

The water contact angle before rubbing treatment was super hydrophilic in any of the samples of Examples 12 to 14, variation in the content of monomers other than the alkyl group-containing siloxane did not significantly affect the bonding of the hydrophilic polymers, and the hydrocarbon group-containing polysiloxane was responsible for bonding of the hydrophilic polymers to the substrate. On the other hand, the contact angles after rubbing treatment tended to increase as the content of trifluoromethyl acrylate decreased. This is considered to be because the substrate containing a small amount of the monomer is very soft, so that distortion when rubbed with a rubber glove increased, making it easier for CLPAH-100 to peel off (or for PDMS to appear on the surface).

It can be said that the mechanical strength of the contact lenses has some influence on the stability of the hydrophilic coating layer.

### 8. Study of different plasma generation methods and hydrophilization with different hydrophilic polymers

In this test, plasma was generated by glow discharge, and the surface of a substrate was hydrophilized with different hydrophilic polymers to evaluate hydrophilicity.

### 8-1. Preparation of lens sample

### [Example 15]

Using a plasma generator equipped with a glow discharge type parallel plate electrode (distance between electrodes: 4 cm) with a diameter of 9 cm (manufactured by MEIWAFOSIS CO., LTD., trade name: SEDE (soft etching device)), nitrogen gas was introduced from a needle valve to generate plasma at a current of 15 mA under a pressure of 20 Pa, and a substrate prepared according to [Synthesis Example 2] was irradiated with the plasma for 10 seconds. After plasma irradiation, nitrogen was introduced to return the chamber to normal pressure, and the substrate was immersed in an aqueous solution of a polyvinyl alcohol with a molecular weight of 25,000 (1.0% by mass) under a nitrogen atmosphere with an oxygen concentration of 0.2%, and was left for 1 hour. The substrate was rinsed with water, then placed in a contact lens storage solution (manufactured by SEED Co., Ltd., Softcare pure), and further heat-treated at 121°C for 30 minutes. After heat treatment, the sample was sufficiently rinsed with water, and the water adhering to the surface was removed.

### [Example 16]

A lens sample of which surface was hydrophilized was prepared in the same manner as in Example 15 except that the substrate after plasma treatment was immersed in an aqueous solution (1.0% by mass) of Pluronic F-127 (PEG-containing block copolymer, surfactant) with a nitrogen atmosphere having an oxygen concentration of 0.6%.

### [Example 17]

A lens sample of which surface was hydrophilized was prepared in the same manner as in Example 15 except that the substrate after plasma treatment was immersed in a aqueous solution of PEG with a molecular weight of 1,000 (1.0% by mass) under a nitrogen atmosphere with an oxygen concentration of 0.6%.

In Examples 15 to 17, nitrogen replacement was conducted using a simple glove back made of polyolefin, so that the oxygen concentration measured by an oxygen concentration meter slightly varied due to deterioration of the glove back.

### 8-2. Characterization (water contact angle and abrasion test)

Analysis of contact angles and an abrasion test were conducted on the samples obtained in Examples 15 to 17 according to the procedures described in 1-3-1 and 2-3-2. However, the samples obtained in Examples 16 and 17 were rubbed 10 times. The test results are summarized below.

**[Table 6]**

| Example | Hydrophilic polymer | Water contact angle (°) | Water contact angle after rubbing (°) |
|---|---|---|---|
| 15 | Polyvinyl alcohol | 44.5° | 59.5 ° |
| 16 | Pluronic F-127 | 67.6° | 68.0° |
| 17 | PEG | 42.0° | 69.7° |

As set forth in Table 6, it has been found that even when plasma by glow discharge was used, the hydrophilic polymers could be adsorbed, and polyvinyl alcohol, Pluronic F-127, and PEG allowed hydrophilization. In the 10 times abrasion test, the water contact angles were not significantly reduced and were 70° or less. However, as compared with low-frequency plasma, plasma by glow discharge was unstable and had high intensity. Therefore, the plasma irradiation time was set to 1/3 (10 seconds) of that of the former, but the shorter time made control difficult. In particular, in the case of glow discharge, plasma was not stable for the first 0.5 seconds. Electrons flew in a fixed direction, so that variation tended to occur on the front and back surfaces of the contact lens. Therefore, when glow discharge is used for surface modification of a contact lens, it may be necessary to devise a method for transporting the contact lens into plasma.

### 9. Study of plasma generation conditions

In this test, plasma was generated under different conditions, and influence on hydrophilization was investigated.

### [Example 18]

### 9-1. Preparation of lens sample

For the plasma treatment, used was a plasma generator in which two circular plate electrodes with a diameter of 10 cm were installed in parallel at an interval of 5 cm in a chamber (manufactured by SAKIGAKE-Semiconductor Co., Ltd., trade name: YHS-DC100). A substrate prepared according to [Synthesis Example 2] was placed between the electrodes, after vacuum replacement in the chamber, a nitrogen gas was then introduced, and the sample was irradiated with plasma under a pressure of 20 Pa for 30 seconds. The flow rate of the nitrogen gas was 10 sccm, and the output was 50 W. After plasma irradiation, nitrogen gas was introduced to return the chamber to normal pressure, and the substrate subjected to plasma treatment under a nitrogen atmosphere was immersed in a CLPAH-100 aqueous solution (0.3% by mass) and left for 30 minutes. Thereafter, the CLPAH-100 aqueous solution containing the contact lens was transferred to a vial in the air and heated at 121°C for 30 minutes. The contact lens was thoroughly washed with water, then placed in a contact lens storage solution (manufactured by SEED Co., Ltd., Softcare pure), and further heat-treated at 121°C for 30 minutes. After heat treatment, the sample was sufficiently rinsed with water, and the water adhering to the surface was removed.

### 9-2. Characterization (contact angle and abrasion test)

Measurement of contact angles and an abrasion test were conducted on the samples obtained according to the procedures described in 1-3-1 and 2-3-2.

The sample obtained in Example 18 was superhydrophilic (water contact angle could not be measured), and the contact angle after rubbing treatment was 58.3°. In addition, the sample exhibited a water contact angle of 70.5° even 4 days after abrasion test.

### 10. Evaluation of gas flow rate during plasma treatment

In this test, the influence of different nitrogen gas flow rates during plasma treatment on the activation of the surface of a substrate was evaluated.

### [Reference Examples 3 and 4]

### 10-1. Plasma treatment

The substrate prepared in [Synthesis Example 2] was subjected only to plasma treatment under the procedure and conditions described in [Example 3] except that the nitrogen gas flow rate was increased to 20 sccm or 30 sccm.

### 10-2. Evaluation of activation of substrate surface (water contact angle)

Water contact angles of the substrates of Reference Examples 3 and 4 were measured according to the procedure described in 1-3-1.

A water contact angle of the substrate of Reference Example 2 subjected to plasma treatment at a nitrogen gas flow rate of 10 sccm was 40.7°, whereas water contact angles of the substrates of Reference Examples 3 and 4 done at nitrogen gas flow rates of 20 sccm and 30 sccm were 46.6° and 63.1°, respectively. Therefore, it was suggested that as the nitrogen gas flow rate is increased, activation of the surface of the substrate is suppressed; namely, the number of radicals decreases.

This is considered to be because the concentration of active species in the nitrogen plasma decreased as the inflow of nitrogen gas increased, and the large gas inflow made the gas temperature decreased and the plasma milder. This hydrophilicity can be improved by increasing the plasma irradiation time, and it is therefore desirable to set the irradiation time to be longer as the gas inflow amount is increased.

### 11. Evaluation of atmosphere in chamber in plasma treatment (1)

In this test, plasma was generated in a CO₂ gas atmosphere, and effect thereof on hydrophilization was investigated.

### [Comparative Example 1]

### 11-1. Preparation of lens sample

A lens sample was prepared in the same manner as in Example 18 except that the atmosphere in the chamber was changed to CO₂ gas instead of nitrogen gas.

The substrate prepared according to Synthesis Example 2 was placed between the electrodes of the plasma generator used in Example 18, after vacuum replacement in the chamber, CO₂ gas was introduced, and the sample was irradiated with plasma under a pressure of 20 Pa for 30 seconds. The flow rate of CO₂ gas was 10 sccm, and the output was 50 W. After plasma irradiation, CO₂ gas was introduced to return the chamber to normal pressure, and the plasma-treated substrate was immersed in a CLPAH-100 aqueous solution (0.3% by mass) and left for 30 minutes. After washing it with water, the CLPAH-100 aqueous solution containing the contact lens was transferred to a vial in the air and heated at 121°C for 30 minutes. The contact lens was thoroughly washed with water, then placed in a contact lens storage solution (manufactured by SEED Co., Ltd., Softcare pure), and further heat-treated at 121°C for 30 minutes. After heat treatment, the sample was sufficiently rinsed with water, and the water adhering to the surface was removed.

### 11-2. Characterization (water contact angle and abrasion test)

Measurement of water contact angles and an abrasion test were conducted on a plurality of samples (n = 6) according to the procedures described in 1-3-1 and 2-3-2.

**[Table 7]**

| | Sample | Water contact angle (°) | Water contact angle after rubbing (°) | Water contact angle after 4 days (°) |
|---|---|---|---|---|
| Comparative Example1 | 1 | 61.1° | 65.4° | 86.5° |
| | 2 | 58.8° | 67.4° | 79.8° |
| | 3 | Unmeasurable | 71.5° | 91.6° |
| | 4 | 73.3° | 70.4° | 85.7° |
| | 5 | Unmeasurable | 70.6° | 79.5° |
| | 6 | Unmeasurable | 70.7° | 84.6° |

| | | | | |
|---|---|---|---|---|
| Unmeasurable: The water contact angle could not be measured due to superhydrophilicity. | | | | |

Table 7 shows changes in water contact angles on the surfaces of six samples of Comparative Example 1. With N₂ plasma, the contact angle after rinsing showed super hydrophilicity, whereas with CO₂ gas plasma the variation became large. After the abrasion test, the variation became relatively small, and the binding of CLPAH-100 could be confirmed. However, 4 days after exposure to the atmosphere, some exhibited a water contact angle of 91.6°, indicating that CLPAH-100 was likely to peel off.

### 12. Evaluation of atmosphere in chamber in plasma treatment (2)

In this test, plasma was generated in an air atmosphere, and influence thereof on hydrophilization was investigated.

### [Comparative Example 2]

### 12-1. Preparation of lens sample

A lens sample was prepared in the same manner as in Example 18 except that the atmosphere in the chamber was changed to air (oxygen concentration: 21%) instead of nitrogen gas.

A substrate prepared according to Synthesis Example 2 was placed between the electrodes of the plasma generator used in Example 18, after vacuum replacement in the chamber, air (oxygen concentration: 21%) was introduced from the outside air, and the sample was irradiated with plasma under a pressure of 20 Pa for 30 seconds. The air flow rate was 30 sccm (taken in from the atmosphere), and the output was 50 W. After plasma irradiation, air was introduced to return the chamber to normal pressure, and the substrate subjected to plasma treatment under the air atmosphere was immersed in a CLPAH-100 aqueous solution (0.3% by mass) and left for 30 minutes. After washing it with water, the CLPAH-100 aqueous solution containing the contact lens was transferred to a vial in the air and heated at 121°C for 30 minutes. The contact lens was thoroughly washed with water, then placed in a contact lens storage solution (manufactured by SEED Co., Ltd., Softcare pure), and further heat-treated at 121°C for 30 minutes. After heat treatment, the sample was sufficiently rinsed with water and the water adhering to the surface was removed.

### 12-2. Characterization (water contact angle and abrasion test)

Measurement of water contact angles and an abrasion test were conducted on a plurality of samples (n = 6) obtained in Comparative Example 2 according to the procedures described in 1-3-1 and 2-3-2.

**[Table 8]**

| | Sample | Water contact angle (°) | Water contact angle after rubbing (°) | Water contact angle after 4 days (°) |
|---|---|---|---|---|
| Comparative Example2 | 1 | Unmeasurable | 63.1° | 89.4° |
| | 2 | Unmeasurable | 72.0° | 93.1° |
| | 3 | Unmeasurable | 71.9° | 94.6° |
| | 4 | Unmeasurable | 65.9° | 86.3° |
| | 5 | Unmeasurable | 71.7° | 87.8° |
| | 6 | Unmeasurable | 71.9° | 87.8° |

| | | | | |
|---|---|---|---|---|
| Unmeasurable: The water contact angle could not be measured due to superhydrophilicity. | | | | |

Table 8 shows changes in water contact angles on the surfaces of six samples of Comparative Example 2. The contact angles after rinsing showed super hydrophilicity. After the abrasion test, the variation was relatively small, and the binding of CLPAH-100 could be confirmed. However, 4 days after exposure to the atmosphere, some exhibited a water contact angle of 93.1° or 94.6°, indicating that CLPAH-100 was more likely to peel off as compared with the plasma of CO₂ gas. In fact, the average water contact angle after 4 days is 89.9°, which is 5.2° greater than that in the case of CO₂ plasma. This is probably because Si · radicals and Si-CH₂ · radicals on the surface of the contact lens were reduced by oxygen in the air plasma. Some functional groups such as hydroxyl groups may have been formed on a part of the surface, but these functional groups would have disappeared from the contact lens surface over time, and the surface has become hydrophobic.

### 13. Evaluation of hydrophilization by plasma polymerization method

PATENT LITERATURE 9 proposes a method of forming a polymer film on the surface of a contact lens containing PDMS by plasma polymerization of hydrogen and tetrafluoroethylene, and further hydrophilizing the surface by oxygen plasma treatment. Also, PATENT LITERATURE 10 proposes a method of forming a hydrophilic coating layer by plasma polymerization with a mixed gas of argon and N-vinylpyrrolidone.

Therefore, in this test, hydrophilicity of a lens with a hydrophilic coating layer formed by plasma polymerization was evaluated and compared with that of a lens obtained by a method by plasma treatment of the present invention.

### [Comparative Example 3]

### 13-1. Preparation of lens sample

Using a plasma generator in which two circular flat plate electrodes with a diameter of 10 cm were installed in parallel at an interval of 5 cm in a chamber (manufactured by SAKIGAKE-Semiconductor Co., Ltd., trade name: YHS-DC100), a substrate prepared according to [Synthesis Example 2] was placed between the electrodes. Vapor of N-vinylpyrrolidone was introduced into the chamber of the plasma generator from a glass container containing liquid N-vinylpyrrolidone. At this time, the inner diameter of the plasma chamber was set to 120 mm, the inner diameter of the vapor introduction pipe was set to 4 mm, and the exhaust gas flow path was narrowed to increase the pressure of N-vinylpyrrolidone in the chamber.

In a state where the exhaust gas flow path was opened, the flow rate of N-vinylpyrrolidone could not exceed 12 sccm, and the pressure in the chamber became 2 Pa, so that plasma of N-vinylpyrrolidone could not be generated. This is considered to be because N-vinylpyrrolidone has a large molecular weight and few radicals can be generated. On the other hand, when the exhaust gas flow path was completely closed, the vapor pressure can be adjusted to about 18 Pa, but in this case, the pressure in the chamber increased to about 40 Pa due to generation of plasma. This is considered to be because N-vinylpyrrolidone was decomposed in the plasma and the number of molecules of the decomposition product was at least doubled. Therefore, the exhaust gas flow path was slightly opened to reduce the pressure in the chamber to 10 Pa. In this case, the inflow amount of N-vinylpyrrolidone vapor was almost 0 sccm. Plasma was generated at an output of 50 W, and the substrate was irradiated with the plasma for 30 seconds. Thereafter, air was introduced to return the chamber to normal pressure. The obtained sample was sufficiently rinsed with water, and the water adhering to the surface was removed.

The obtained sample became slightly white when rinsed with water, but was peeled off immediately after rubbing and became transparent. This is considered to be because a carbon film was formed on the surface and peeled off when rubbed.

### 13-2. Characterization (water contact angle and rubbing resistance)

Measurement of water contact angles and an abrasion test were conducted on a plurality of samples (n = 6) obtained in Comparative Example 3 according to the procedures described in 1-3-1 and 2-3-2. The results are shown below.

**[Table 9]**

| | Sample | Water contact angle (°) | Water contact angle after rubbing (°) | Water contact angle after 4 days (°) |
|---|---|---|---|---|
| Comparative Example 3 | 1 | 59.3° | 60.0° | 103.3° |
| | 2 | 61.8° | 68.9° | 101.0° |
| | 3 | 61.9° | 72.3° | 105.0° |
| | 4 | 65.4° | 70.2° | 104.4° |
| | 5 | 49.9° | 69.8° | 104.2° |
| | 6 | 60.9° | 76.7° | 106.0° |

Table 9 shows changes in water contact angles on the surfaces of the six samples of Comparative Example 3. The contact angles after rinsing were not super hydrophilic, and a carbon film is likely to have been formed. Most of the carbon film was peeled off by abrasion test, and the water contact angles was stable. However, in the measurement of the water contact angle on 4 days after exposure to the atmosphere, all the values were 100° or more. From these results, it is considered that the carbon film hardly covered the surface of the contact lens and would peel off with time, so that the surface was significantly hydrophobized. Therefore, it has been clearly found that no PVP film was formed on the surface of the contact lens.

In a plasma polymerization method with N-vinylpyrrolidone as a gas raw material, it is difficult to introduce vapor into the chamber, and N-vinylpyrrolidone is decomposed in the plasma to form a carbon film, which is easily peeled off by rubbing stress. That is, by the method, a carbon film, which is easily peeled off, is formed and is completely different from a coating layer of a hydrophilic polymer of the present invention.

### 14. Durability against rubbing and storage in atmosphere

In this test, durability against a repeated abrasion test, and exposure to the atmosphere was evaluated.

### [Example 19]

### 14-1. Preparation of lens sample

A substrate was subjected to plasma treatment, and then immersed in a PVP aqueous solution to coat the surface of the substrate. For the plasma treatment, a plasma generator was used in which two circular plate electrodes with a diameter of 20 cm were installed in parallel at an interval of 5 cm in a chamber. A substrate prepared according to [Synthesis Example 2] was placed between the electrodes, after vacuum replacement in the chamber, a nitrogen gas was introduced, and the sample was irradiated with plasma under a pressure of 19 Pa for 60 seconds. The flow rate of the nitrogen gas was 10 sccm, and the output was 80 W. After plasma irradiation, nitrogen gas was introduced to return the chamber to normal pressure, and the substrate subjected to plasma treatment was immersed in a PVP aqueous solution (0.2% by mass, weight average molecular weight of 360,000) under a nitrogen atmosphere and left for 30 minutes. Thereafter, the sample was sufficiently rinsed with water, and the water adhering to the surface was removed.

### 14-2. Characterization (contact angle and abrasion test)

### 14-2-1. Abrasion test

The samples (n = 3) obtained in Example 19 in a state of being wetted with pure water was rubbed 200 times with a nitrile rubber glove, and washed with pure water, and after wiping off the water adhering to the surface, a water contact angle was measured according to the procedure described in 1-3-1.

### 14-2-2. Hydrophilicity evaluation after exposure to atmosphere for 3 days

In order to evaluate the stability of the coating layer of the hydrophilic polymer on the surface, the samples (n = 3) obtained in Example 19 in a state of being wetted with pure water were rubbed 200 times with a nitrile rubber glove, and washed with pure water, and after wiping off the water adhering to the surface, the samples were exposed to the atmosphere for 3 days, and a contact angle was measured according to the procedure described in 1-3-1.

### 14-2-3. Hydrophilicity evaluation after water treatment

In order to evaluate recoverability to the decrease in hydrophilicity after the exposure test, the samples (n = 3) after the exposure to the atmosphere for 3 days were immersed in water for 10 minutes, and after wiping off the water adhering to the surface, a contact angle was measured according to the procedure described in 1-3-1.

The results of each test are shown below.

**[Table 10]**

| | Sample | Contact angle after 200 times rubbing (°) | Water contact angle after 3 days (°) | Contact angle after water treatment for 10 minutes (°) |
|---|---|---|---|---|
| Example 19 | 1 | 44.6° | 70.2° | 62.8° |
| | 2 | 42.8° | 52.9° | 52.9° |
| | 3 | 39.0° | 60.1° | 56.6° |

The samples obtained in Example 19 after the 200 times abrasion test had an average value of contact angles of 42.1°. From this result, it is found that the samples of Example 19 retain sufficient hydrophilicity even after 200 times abrasion test. The samples obtained in Example 19 after being exposed to the atmosphere for 3 days had an average value of contact angles of 61.1°. In addition, the samples obtained in Example 19 after being subjected to the water treatment for 10 minutes had an average value of contact angles of 57.4°. These results mean that even when the number of times of abrasion tests was set to 200 times and then exposed to the atmosphere, the hydrophilic polymer on the surface was retained, and the hydrophilic property was recovered to a certain extent by immersion in water.

In this example, it is considered that more radicals were formed in the vicinity of the surface by irradiating the sample with plasma for 60 seconds at an output of 80 W, and they reacted, so that the bonding between the hydrophilic polymer and the substrate was further strengthened, and diffusion of the hydrophobic polymers to the surface was suppressed. In addition, it is considered that the hydrophilic polymers on the surface are less likely to be peeled off due to entanglement between the hydrophilic polymers and the PDMS chains. That is, the Si · radicals formed in the vicinity of the surface of the sample finally forms a Si-OH group (silanol group), but this silanol group undergoes dehydration condensation, and a crosslinked structure is introduced into the PDMS chains. When the silanol group formed on the surface undergoes dehydration condensation, if a hydrophilic polymer is present in the vicinity, the hydrophilic polymer could be entangled with crosslinked PDMS chains, whereby the hydrophilic polymer becomes hardly peeled off (see FIG. 1 described above).

### 15. Durability against abrasion test and long-term storage in atmosphere

In this test, durability against a repeated abrasion test and exposure to the atmosphere for a long period of time was evaluated.

### [Example 20]

### 15-1. Preparation of lens sample

A substrate was subjected to plasma treatment, and then immersed in a PVP aqueous solution to coat the surface of the substrate. For the plasma treatment, a plasma generator in which two circular plate electrodes with a diameter of 20 cm were installed in parallel at an interval of 5 cm in a chamber was used. A substrate prepared according to [Synthesis Example 2] was placed between the electrodes, after vacuum replacement in the chamber, a nitrogen gas was introduced, and the sample was irradiated with plasma under a pressure of 19 Pa for 60 seconds. The flow rate of the nitrogen gas was 10 sccm, and the output was 80 W. After the plasma irradiation, nitrogen gas was introduced to return the chamber to normal pressure, and the substrate subjected to the plasma treatment was immersed in a PVP aqueous solution (0.2% by mass, weight average molecular weight of 360,000) under a nitrogen atmosphere and left for 30 minutes. The contact lenses were then transferred to a vial containing a 1.0% by mass aqueous solution of polyphosphorylcholine (MPC: poly 2-methacryloyloxyethyl phosphorylcholine, weight average molecular weight of 100,000) in the air and heated at 121°C for 30 minutes. After the heat treatment, the sample was sufficiently rinsed with water, and the water adhering to the surface was removed.

### 15-2. Characterization (contact angle and abrasion test)

### 15-2-1. Abrasion test

The samples (n = 6) obtained in Example 20 in a state of being wetted with pure water was rubbed 200 times with a nitrile rubber glove, and washed with pure water, and after wiping off the water adhering to the surface, a water contact angle was measured according to the procedure described in 1-3-1.

### 15-2-2. Hydrophilicity evaluation after exposure to atmosphere for 3 days

In order to evaluate stability of the coating layer of the hydrophilic polymer on the surface, the samples (n = 6) obtained in Example 20 in a state of being wetted with pure water were rubbed 200 times with a nitrile rubber glove, and washed with pure water, and after wiping off the water adhering to the surface, the samples were exposed to the atmosphere for 6 days, and a contact angle was measured according to the procedure described in 1-3-1.

### 15-2-3. Evaluation of hydrophilicity after water treatment

In order to evaluate recoverability to the decrease in hydrophilicity after the exposure test, the samples (n = 6) after the exposure to the atmosphere for 6 days were immersed in water for 10 minutes, and after wiping off the water adhering to the surface, a contact angle was measured according to the procedure described in 1-3-1.

The results of each test are shown below.

**[Table 11]**

| | Sample | Contact angle after 200 times rubbing (°) | Water contact angle after 6 days (°) | Contact angle after water treatment for 10 minutes (°) |
|---|---|---|---|---|
| Example 20 | 1 | 49.3° | 58.0° | 55.0° |
| | 2 | 46.6 ° | 58.1° | 47.0° |
| | 3 | 40.1° | 51.5° | 46.3° |
| | 4 | 44.8° | 48.4° | 46.4° |
| | 5 | 44.4° | 51.5° | 46.7° |
| | 6 | 47.7° | 59.3° | 57.4° |

The samples obtained in Example 20 after the 200 times abrasion test had an average value of contact angles of 45.5°. From this result, it is found that the sample of Example 20 retained sufficient hydrophilicity even after the 200 times abrasion test. The samples exposed to the atmosphere for another 6 days after rubbing treatment had an average value of contact angles of 54.5°. In addition, the samples exposed to the atmosphere and then further immersed in water for 10 minutes had an average value of contact angles of 49.8°. Therefore, it has been found that the hydrophilic polymers on the surface was retained even when the sample was exposed to the atmosphere for a long period of time after the abrasion test.

## Claims

1. A soft ocular lens comprising:
an ocular lens substrate containing a (co)polymer with an alkyl group-containing polysiloxane structure, and
a single coating layer containing a hydrophilic polymer on the surface of the substrate,
wherein the surface of the coating layer has a water contact angle of 70° or less.

2. The soft ocular lens according to claim 1, wherein an entire peak derived from Si₂ₚ in XPS measurement has a full width at half maximum of 2.1 eV or less.

3. The soft ocular lens according to claim 1, wherein 60% or more of peaks derived from Si₂ₚ in XPS measurement are bonded to two O atoms and two C atoms.

4. The soft ocular lens according to any one of claims 1 to 3, wherein surface adsorbed water is confirmed by XPS measurement under a water vapor pressure of 5 mbar.

5. The soft ocular lens according to claim 4, wherein the surface of the coating layer after a 20 times abrasion test has a water contact angle of 70° or less.

6. The soft ocular lens according to claim 4, wherein the surface of the coating layer after a 200 times abrasion test has a water contact angle of 50° or less.

7. The soft ocular lens according to any one of claims 1 to 6, wherein the coating layer has a thickness of 1 nm to 5 µm.

8. The soft ocular lens according to any one of claims 1 to 7, wherein the substrate and the hydrophilic polymer are linked at least through a C-C bond between Si-C of the substrate and C of the hydrophilic polymer.

9. The soft ocular lens according to any one of claims 1 to 8, wherein the substrate and the hydrophilic polymer are further linked through an O-C bond between Si-alkylene-O-O of the substrate and C of the hydrophilic polymer.

10. The soft ocular lens according to claim 8 or 9, wherein the substrate and the hydrophilic polymer are further linked through a Si-C bond between Si of the substrate and C of the hydrophilic polymer.

11. The soft ocular lens according to any one of claims 1 to 10, wherein the hydrophilic polymer is water-soluble and has an atom having a non-covalent pair or a double bond, wherein a carbon adjacent to the atom having a non-covalent pair or the double bond is bonded to Si, a carbon of Si-C, or an oxygen of Si-alkylene-O-O of the substrate.

12. The soft ocular lens according to any one of claims 1 to 11, wherein the substrate is obtained by polymerizing a (macro)monomer composition containing 20% by mass or more of an alkyl group-containing polysiloxane.

13. The soft ocular lens according to claim 11, wherein the hydrophilic polymer comprises a polyvinylpyrrolidone, a polyacrylic acid, an ethylene glycol-crosslinked polyacrylic acid polymer, a starch-grafted polyacrylic acid, PEG, a PEG-containing block copolymer, alginic acid, chondroitin sulfate, hyaluronic acid, pectin, hydroxyethyl cellulose, dextran, a polyvinyl alcohol, a polyethyleneimine, a polyglutamic acid, or a polyacrylamide.

14. The soft ocular lens according to any one of claims 1 to 13, wherein the soft ocular lens has an oxygen permeability value (Dk) of 150 or more.

15. A method for producing a soft ocular lens, comprising steps of:
subjecting an ocular lens substrate containing a (co)polymer with an alkyl group-containing polysiloxane structure to plasma treatment in an inert gas atmosphere to form a radical on the surface of the substrate; and
immersing the substrate in an aqueous solution of a hydrophilic polymer containing a structure capable of resonating with a radical formed on a carbon atom to form a coating layer containing the hydrophilic polymer.

16. The method according to claim 15, wherein the radical comprises a Si · radical and a Si-alkyl · radical.

17. The method according to claim 16, wherein the radical further comprises a Si-alkylene-O-O · radical.

18. The method according to any one of claims 15 to 17, wherein immediately after the plasma treatment, at least 10% of C bonded to Si present on the surface of the substrate are radicals.

19. The method according to any one of claims 15 to 18, wherein immediately after the plasma treatment, at least 20% of alkyl group-containing polysiloxane units present on the surface of the substrate are radicals.

20. The method according to any one of claims 15 to 19, wherein the plasma is generated at a low frequency of 50 Hz or 60 kHz and a power of 10 to 150 W.

21. The method according to claim 20, wherein the inert gas is introduced into a reaction chamber at a gas pressure of 2 Pa to 30 Pa and a flow rate of 1 sccm to 100 sccm.

22. The method according to claim 20 or 21, wherein the plasma treatment is performed for 5 seconds to 2 minutes.

23. The method according to claim 22, wherein the plasma is generated at a power of 60 to 150 W, and the plasma treatment is performed for 50 seconds to 2 minutes.

24. The method according to any one of claims 15 to 19, wherein the plasma is generated at 3 to 30 mA by glow discharge.

25. The method according to any one of claims 15 to 24, wherein the substrate is obtained by polymerizing a (macro)monomer composition containing 20% by mass or more of an alkyl group-containing polysiloxane.

26. The method according to any one of claims 15 to 25, wherein the hydrophilic polymer is water-soluble and has an alkyl group or an alkylene group or a methine group, and an atom having a non-covalent electron pair or a double bond, wherein a carbon of the alkyl group or the alkylene group or the methine group is present adjacent to the atom having a non-covalent electron pair or the double bond.

27. The method according to claim 26, wherein the hydrophilic polymer comprises a polyvinylpyrrolidone, a polyacrylic acid, an ethylene glycol-crosslinked polyacrylic acid polymer, a starch-grafted polyacrylic acid, PEG, a PEG-containing block copolymer, alginic acid, chondroitin sulfate, hyaluronic acid, pectin, hydroxyethyl cellulose, dextran, a polyvinyl alcohol, a polyethyleneimine, a polyglutamic acid, or a polyacrylamide.

28. The method according to any one of claims 15 to 27, wherein the substrate subjected to the plasma treatment is held in an oxygen-containing atmosphere for a short period of time.

29. The method according to any one of claims 15 to 28, wherein the substrate on which the radical has been formed is immersed in the aqueous solution of the hydrophilic polymer within 10 seconds after the plasma treatment.

30. The method according to any one of claims 15 to 29, wherein the substrate on which the radical has been formed is immersed in the aqueous solution of the hydrophilic polymer at a temperature of 10 to 30°C for 30 minutes to 1 hour.

31. The method according to claim 30, wherein the substrate on which the radical has been formed is further immersed in the aqueous solution of the hydrophilic polymer at a temperature of 80 to 135°C for 20 minutes to 2 hours to be heat-treated.
